(19) Europäisches Patentamt / European Patent Office / Office européen des brevets

(11) **EP 4 467 588 A1**

(12) # EUROPEAN PATENT APPLICATION
published in accordance with Art. 153(4) EPC


(43) Date of publication:
**27.11.2024 Bulletin 2024/48**

(21) Application number: **23743250.5**

(22) Date of filing: **17.01.2023**

(51) International Patent Classification (IPC):
***C08G 59/14*** (2006.01) ***C08G 59/04*** (2006.01)
***C08J 5/24*** (2006.01) ***C09D 163/00*** (2006.01)
***C09J 163/00*** (2006.01)

(52) Cooperative Patent Classification (CPC):
**C08G 59/04; C08G 59/14; C08J 5/24; C09D 163/00; C09J 163/00**

(86) International application number:
**PCT/JP2023/001214**

(87) International publication number:
**WO 2023/140256 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2022 JP 2022005567**



(71) Applicant: **Mitsubishi Chemical Corporation**
**Tokyo 100-8251 (JP)**

(72) Inventor: **SUGIYAMA, Daiki**
**Tokyo 100-8251 (JP)**

(74) Representative: **TBK**
**Bavariaring 4-6**
**80336 München (DE)**


(54) **MODIFIED EPOXY RESIN, CURABLE RESIN COMPOSITION, AND CURED PRODUCT THEREOF**


(57) The present invention provides a modified epoxy resin including a structural unit derived from an epoxy compound, and a structural unit derived from an acid-terminated polyester, wherein the modified epoxy resin has a weight average molecular weight of from 1,500 to 50,000, and an epoxy equivalent of from 500 to 10,000 g/eq, and wherein the modified epoxy resin is represented by the following formula (1) (wherein, in the formula (1), n represents a number from 1 to 30, X is a structural unit derived from an epoxy compound, and Y is a structural unit derived from an acid-terminated polyester).

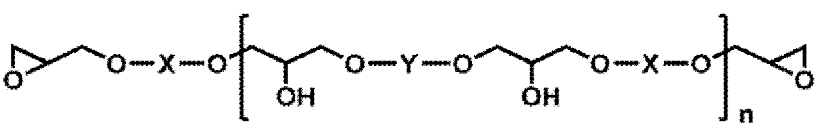

・・・(1)


EP 4 467 588 A1

## Description

### TECHNICAL FIELD

The present invention relates to a modified epoxy resin, a method of producing a modified epoxy resin, a curable resin composition containing a modified epoxy resin, and a cured product of the curable resin composition. The present invention also relates to a coating material, an adhesive, a coating composition for powder coating, a coating composition for a can and a prepreg that include the curable resin composition; a coating film, a fiber-reinforced plastic and a laminated plate that include the cured product; as well as a member for a can and a can that include the coating film.

### BACKGROUND ART

Epoxy resins are used in a number of applications, for example, mainly in the field of coating materials, the field of civil engineering and the electric field, because of their excellent electrical properties, adhesion, heat resistance, and the like. In particular, bisphenol A type epoxy resins are widely used, because of their excellent availability, low cost, and a good balance between mechanical properties. A cured coating film containing a high molecular weight bisphenol A type epoxy resin has a high adhesion, coating film hardness, point impact resistance, bending resistance, stability in hot water and retort resistance, and thus is used in the application of coating the inner surfaces of food cans.

However, bisphenol A is suspected to be an endocrine disruptor, and therefore, a reduction in the use of bisphenol A type epoxy resins is strongly demanded in the market, in food contact applications, such as coating of food containers, coating of beverage containers, and the like.

Due to a marked increase in environmental awareness, in recent years, the use of bisphenol A type epoxy resins has started to decline not only in the food contact applications, but also in various applications described above. So far, an epoxy resin composition using an epoxy resin which does not contain bisphenol A as a constituent component has been proposed, as a substitute for a bisphenol A type epoxy resin composition.

For example, Patent Document 1 discloses a coating composition for coating an aqueous food or beverage can, which composition is suitable for use in the formation of a food contact coating for a food or beverage can made of metal, wherein the coating composition contains: an aqueous carrier; and a resin system containing a water-dispersible polymer and an emulsion-polymerizable ethylenically unsaturated monomer component. In the coating composition, an aromatic polyether polymer which does not substantially contain each of bisphenol A, bisphenol F and bisphenol S (including epoxides of these compounds) can be suitably used, as the water-dispersible polymer.

Further, Patent Document 2 discloses, as an epoxy resin other than a bisphenol A type epoxy resin, a copolymer of a diglycidyl ether of an aliphatic diol and an acid-terminated polyester.

### RELATED ART DOCUMENTS

### PATENT DOCUMENTS

Patent Document 1: JP 2019-518091 A
Patent Document 2: JP 2019-73676 A

### SUMMARY OF THE INVENTION

### PROBLEMS TO BE SOLVED BY THE INVENTION

However, the coating composition disclosed in Patent Document 1 had insufficient properties, such as corrosion resistance on a metal substrate, flexibility and durability.

Further, although the epoxy resin other than a bisphenol A type epoxy resin, which is disclosed in Patent Document 2, shows very high flexibility due to using a diglycidyl ether of an aliphatic diol, there is room for improvement from the viewpoint of mechanical properties. Therefore, the development of an epoxy resin having a good balance between the flexibility and the mechanical properties is desired.

The present invention has been made in view of the above-described prior arts, and an object of the present invention is to provide a modified epoxy resin which has a structure different from that of a bisphenol A type epoxy resin, and which gives a cured product or a cured coating film having an adhesion, a coating film hardness, a cupping resistance, a point impact resistance, a bending resistance and a hot water resistance that are equal to or higher than those of a cured product of a conventional high molecular weight bisphenol A type epoxy resin.

Further, another object of the present invention is to provide a method of producing a modified epoxy resin, a curable resin composition containing a modified epoxy resin, and a cured product of a curable resin composition containing a modified epoxy resin.

MEANS FOR SOLVING THE PROBLEMS

As a result of intensive studies to solve the above-mentioned problems, the present inventors have found out that the above-mentioned problems can be solved by using, as an epoxy resin, a modified epoxy resin which contains a structural unit derived from an epoxy compound, and a structural unit derived from an acid-terminated polyester, and which has a weight average molecular weight of from 1,500 to 50,000, and an epoxy equivalent of from 500 to 10,000 g/eq, thereby completing the present invention.

Specifically, the gist of the present invention resides in the following [1] to [17].

[1] A modified epoxy resin, including a structural unit derived from an epoxy compound, and a structural unit derived from an acid-terminated polyester,

wherein the modified epoxy resin has:

a weight average molecular weight of from 1,500 to 50,000, and
an epoxy equivalent of from 500 to 10,000 g/eq, and

wherein the modified epoxy resin is represented by the following formula (1):

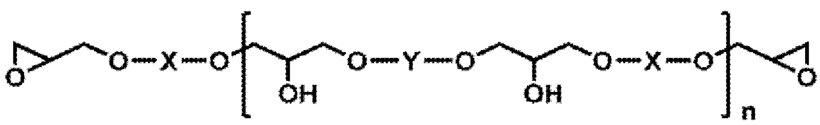

・・・(1)

(wherein, in the formula (1), n is the mean value of the number of repeating units, and represents a number from 1 to 30; X is a structural unit derived from an epoxy compound, and represents a divalent group represented by the following formula (2); Y is a structural unit derived from an acid-terminated polyester, and represents a divalent group represented by the following formula (3); a plurality of X's may be the same as, or different from, each other; and a plurality of Y's may be the same as, or different from, each other),

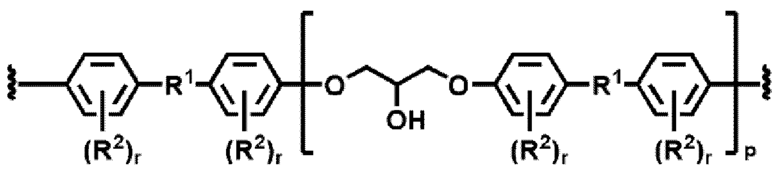

・・・(2)

(wherein, in the formula (2), p is the mean value of the number of repeating units, and represents a number from 0 to 10; $R^1$ represents a direct bond or an alkylene group having from 1 to 15 carbon atoms; $R^2$ represents an alkyl group having from 1 to 4 carbon atoms; r represents an integer from 1 to 4; a plurality of $R^1$'s may be the same as, or different from, each other; a plurality of $R^2$'s may be the same as, or different from, each other; and a plurality of r's may be the same as, or different from, each other),

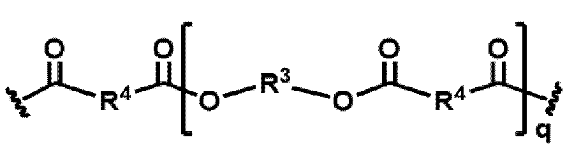

・・・(3)

(wherein, in the formula (3), $R^3$ represents a hydrocarbon group having from 2 to 40 carbon atoms which may contain a hetero atom; $R^4$ represents a hydrocarbon group having from 2 to 40 carbon atoms which may contain a hetero atom; q is the mean value of the number of repeating units, and represents a number from 1 to 50; a plurality of $R^3$'s may be the same as, or different from, each other; and a plurality of $R^4$'s may be the same as, or different

from, each other).

[2] The modified epoxy resin according to [1], wherein, in the formula (2), $R^1$ represents a direct bond or a methylene group, $R^2$ represents a methyl group, and r represents an integer from 1 to 2.

[3] A method of producing a modified epoxy resin, the method including a reaction step of allowing an epoxy compound (A) represented by the following formula (4) to react with an acid-terminated polyester (B) represented by the following formula (5):

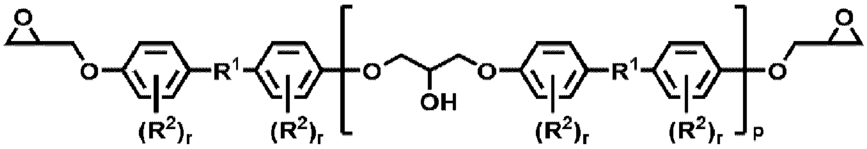

... (4)

(wherein, in the formula (4), the definitions of p, r, $R^1$ and $R^2$ are the same as those of p, r, $R^1$ and $R^2$ in the formula (2), respectively),

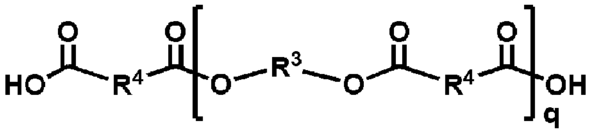

... (5)

(wherein, in the formula (5), the definitions of $R^3$, $R^4$ and q are the same as those of $R^3$, $R^4$ and q in the formula (3), respectively).

[4] The method of producing a modified epoxy resin according to [3], wherein the modified epoxy resin has a weight average molecular weight of from 1,500 to 50,000.

[5] The method of producing a modified epoxy resin according to [3] or [4], wherein the modified epoxy resin has an epoxy equivalent of from 500 to 10,000 g/eq.

[6] A curable resin composition including the modified epoxy resin according to [1] or [2], and a curing agent.

[7] A coating material including the curable resin composition according to [6].

[8] An adhesive including the curable resin composition according to [6].

[9] A coating composition for powder coating, including the curable resin composition according to [6].

[10] A coating composition for a can, including the curable resin composition according to [6].

[11] A prepreg including the curable resin composition according to [6].

[12] A cured product obtained by curing the curable resin composition according to [6].

[13] A coating film including the cured product according to [12] .

[14] A fiber-reinforced plastic including the cured product according to [12].

[15] A laminated plate including the cured product according to [12] .

[16] A member for a can, including a substrate for a can, and the coating film according to [13] provided on the surface of the substrate for a can.

[17] A can using the member for a can according to [16].

EFFECT OF THE INVENTION

According to the present invention, it is possible to provide a modified epoxy resin which has a structure different from that of a bisphenol A type epoxy resin, and which gives a cured product or a cured coating film having an adhesion, a coating film hardness, a cupping resistance, a point impact resistance, a bending resistance and a hot water resistance that are equal to or higher than those of a cured product of a conventional high molecular weight bisphenol A type epoxy resin.

Further, according to the present invention, it is possible to provide a method of producing a modified epoxy resin, a curable resin composition containing a modified epoxy resin, and a cured product of a curable resin composition containing a modified epoxy resin.

MODE FOR CARRYING OUT THE INVENTION

Embodiments of the present invention will be described below in detail. However, the present invention is not limited to the following description, and any modifications can be made without departing from the gist of the present invention. In the present specification, in cases where a range is expressed using "from * to" with numerical values or

physical property values described before and after the "to", the range is defined to include the values described before and after the "to". In the present specification, the term "bifunctional" or "divalent or dihydric" used to describe a compound means that the compound is substantially bifunctional, and a trifunctional or higher functional compound may be included to the extent that the compound does not induce gelation during the production of the modified epoxy resin, namely, in an amount of 5% by weight or less. Further, in the present specification, in cases where the lower limit value and the upper limit value of a numerical range are described separately, the numerical range can be a combination of any lower limit value and any upper limit value, of the lower and upper limit values described above.

[Modified Epoxy Resin]

The modified epoxy resin (hereinafter, simply referred to as "modified epoxy resin"), which is the first embodiment of the present invention, is a modified epoxy resin that contains a structural unit derived from an epoxy compound, and a structural unit derived from an acid-terminated polyester, and that is represented by the following formula (1). The modified epoxy resin according to the present embodiment has a weight average molecular weight of from 1,500 to 50,000, and an epoxy equivalent of from 500 to 10,000 g/eq. In the present specification, the epoxy compound is defined as a concept including an epoxy resin.

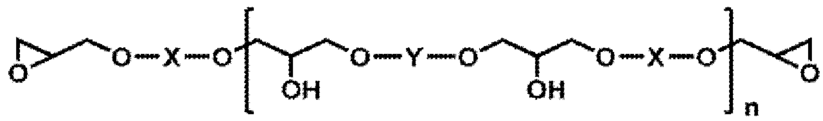

· · · (1)

In the formula (1), n is the mean value of the number of repeating units, and represents a number from 1 to 30.

X is a structural unit derived from an epoxy compound, and represents a divalent group represented by the following formula (2), and a plurality of X's may be the same as, or different from, each other.

Y is a structural unit derived from an acid-terminated polyester, and represents a divalent group represented by the following formula (3), and a plurality of Y's may be the same as, or different from, each other.

Hereinafter, the structural unit derived from an epoxy compound, which is represented by X, and the structural unit derived from an acid-terminated polyester, which is represented by Y, are sometimes referred to as "structural unit (X)" and "structural unit (Y)", respectively.

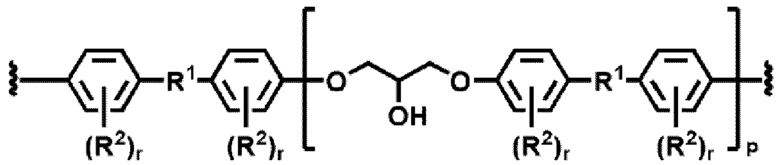

· · · (2)

In the formula (2), p is the mean value of the number of repeating units, and represents a number from 0 to 10.

$R^1$ represents a direct bond or an alkylene group having from 1 to 15 carbon atoms, and a plurality of $R^1$'s may be the same as, or different from, each other.

$R^2$ represents an alkyl group having from 1 to 4 carbon atoms, and a plurality of $R^2$'s may be the same as, or different from, each other.

r represents an integer from 1 to 4, and a plurality of r's may be the same as, or different from, each other.

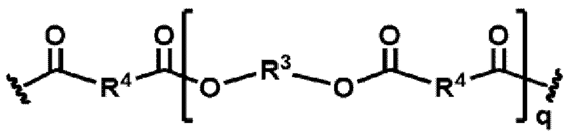

· · · (3)

In the formula (3), $R^3$ represents a hydrocarbon group having from 2 to 40 carbon atoms which may contain a hetero atom, and a plurality of $R^3$'s may be the same as, or different from, each other.

$R^4$ represents a hydrocarbon group having from 2 to 40 carbon atoms which may contain a hetero atom, and a plurality of $R^4$'s may be the same as, or different from, each other.

q is the mean value of the number of repeating units, and represents a number from 1 to 50.

[X in Formula (1)]

X in the above-described formula (1) is a structural unit derived from a bifunctional epoxy compound, and is specifically a divalent group represented by the above-described formula (2). p is the mean value of the number of repeating units, and represents a number from 0 to 10. p is preferably from 0.1 to 8, and more preferably from 0.2 to 5, from the viewpoint that the flexibility can be improved. A plurality of X's may be the same as, or different from, each other.

In the formula (2), $R^1$ represents a direct bond or an alkylene group having from 1 to 15 carbon atoms. $R^1$ is preferably a direct bond or an alkylene group having from 1 to 10 carbon atoms, and more preferably a direct bond or an alkylene group having from 1 to 3 carbon atoms, from the viewpoints of strengthening the intermolecular stacking properties of the modified epoxy resin, and improving the point impact strength and cupping resistance of the resulting cured product. The alkylene group may be, for example, a linear alkylene group, a branched alkylene group, or a cycloalkylene group. The alkylene group is preferably a linear alkylene group or a branched alkylene group, more preferably a methylene group or an isopropylidene group, and particularly preferably a methylene group, from the viewpoints of achieving a compact molecular structure of the modified epoxy resin, and improving the intermolecular stacking properties of the modified epoxy resin. A plurality of $R^1$'s may be the same as, or different from, each other.

In the formula (2), $R^2$ represents an alkyl group having from 1 to 4 carbon atoms. The alkyl group may be, for example, a linear alkyl group, a branched alkyl group or the like. $R^2$ is preferably a linear alkyl group, from the viewpoints of forming a flat molecular structure, and improving the intermolecular stacking properties of the modified epoxy resin. Specific examples of the linear alkyl group include n-butyl group, n-propyl group, ethyl group and methyl group. $R^2$ is preferably a methyl group, among the linear alkyl groups, from the viewpoints of achieving a higher flatness of the molecules, and improving the mechanical properties of the modified epoxy resin. A plurality of $R^2$'s may be the same as, or different from, each other.

In the formula (2), r represents an integer from 1 to 4. r is preferably an integer from 1 to 2, and particularly preferably 2 from the viewpoint of availability.

In cases where r is 1, the positions of substitution of $R^2$'s are preferably the positions shown in the following formula (6). In cases where r is 2, the positions of substitution of $R^2$'s are preferably the positions shown in the following formula (7). This is because, when a substituent is placed in the vicinity of an oxygen atom, a hydrogen bond derived from the oxygen atom can be inhibited, and the mechanical properties of the modified epoxy resin are improved due to an improvement in moderate stacking properties derived from an aromatic skeleton.

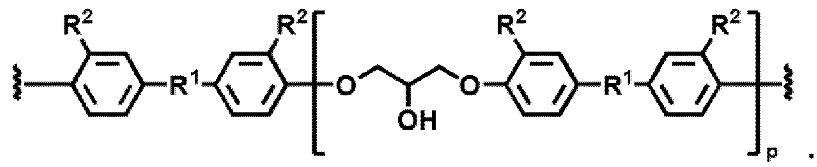 ・・・(6)

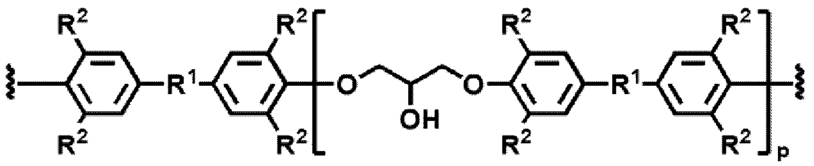 ・・・(7)

Putting all of the above together, X in the formula (1) most preferably has a skeleton derived from tetramethylbisphenol F (4,4'-methylenebis(2,6-dimethylphenol)), as shown in the following formula (8).

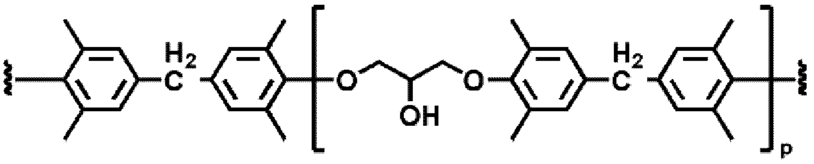 ・・・(8)

It is noted here that the modified epoxy resin is preferably one produced without using bisphenol A, which is an endocrine disruptor, as a raw material. In other words, it is preferred that $R^1$ be not an isopropylidene group, and all of the $R^2$'s of the benzene rings bonded to the isopropylidene group be not hydrogen atoms. However, as will be described later, there is a risk that a trace amount of bisphenol A may be mixed into the reaction system, due to manufacturing reasons. Therefore, the expression "$R^1$ is not an isopropylidene group, and all of the $R^2$'s of the benzene rings bonded to the

isopropylidene group are not hydrogen atoms" means that the modified epoxy resin does not substantially contain (50,000 ppm or less with respect to the total weight of the modified epoxy resin) a group derived from bisphenol A, and does not mean that an embodiment in which $R^1$ is an isopropylidene group, and all of the $R^2$'s of the benzene rings bonded to the isopropylidene group are hydrogen atoms, is completely excluded.

[Y in Formula (1)]

In the above-described formula (3) that represents Y in the above-described formula (1), $R^3$ represents a hydrocarbon group having from 2 to 40 carbon atoms which may contain a hetero atom; $R^4$ represents a hydrocarbon group having from 2 to 40 carbon atoms which may contain a hetero atom; and q is the mean value of the number of repeating units, and represents a number from 1 to 50.

The hydrocarbon group represented by $R^3$ is not particularly limited, and may be, for example, an aliphatic hydrocarbon group having a linear or branched structure, an alicyclic hydrocarbon group, an aromatic hydrocarbon group or the like. The hydrocarbon group is preferably an aliphatic hydrocarbon group having a linear or branched structure, or an alicyclic hydrocarbon group. The number of carbon atoms in the hydrocarbon group represented by $R^3$ is preferably 2 or more, more preferably 3 or more, still more preferably 5 or more, and particularly preferably 6 or more, and at the same time, preferably 35 or less, more preferably 25 or less, still more preferably 20 or less, and particularly preferably 15 or less.

The hydrocarbon group represented by $R^4$ is not particularly limited, and may be, for example, an aliphatic hydrocarbon group having a linear or branched structure, an alicyclic hydrocarbon group, an aromatic hydrocarbon group or the like. The hydrocarbon group is preferably an aromatic hydrocarbon group, or a linear aliphatic hydrocarbon group, and more preferably an aromatic hydrocarbon group. The number of carbon atoms in the hydrocarbon group represented by $R^4$ is preferably 2 or more, more preferably 3 or more, still more preferably 5 or more, and particularly preferably 6 or more, and at the same time, preferably 35 or less, more preferably 25 or less, still more preferably 20 or less, and particularly preferably 15 or less.

In the modified epoxy resin according to the present embodiment, the proportions of the structural unit (X) and the structural unit (Y) constituting the modified epoxy resin can be adjusted to a specific ratio.

The proportion of the structural unit (X) in the modified epoxy resin is represented by the following equation (I).

Proportion (% by weight) of structural unit (X) = (weight of structural unit (X)) $\times$ 100)/weight of modified epoxy resin

The proportion of the structural unit (X) can be calculated from the preparation weight ratio of the epoxy compound (A) and the acid-terminated polyester (B) at the time of production, by any manufacturer of the modified epoxy resin. Further, any user of the modified epoxy resin can calculate the proportion of the structural unit (X), by carrying out a decomposition reaction of the modified epoxy resin, as necessary, performing a qualitative analysis and a quantitative analysis using a nuclear magnetic resonance apparatus, a mass spectrometer and a chromatograph, and analyzing the weight ratio of the constituent components.

The proportion of the structural unit (X) is more than 0% by weight. However, the lower limit value thereof is preferably 1% by weight or more, more preferably 3% by weight or more, still more preferably 5% by weight or more, and particularly preferably 10% by weight or more. When the proportion of the structural unit (X) is equal to or higher than the lower limit value described above, there are tendencies, at the time of producing the modified epoxy resin, that the proportion of the structural unit (Y) is not too high with respect to that of the structural unit (X), that a homogeneous reaction can be more easily carried out, and that an excellent production stability can be obtained.

The upper limit value of the proportion of the structural unit (X) is preferably 80% by weight or less, more preferably 70% by weight or less, still more preferably 60% by weight or less, yet still more preferably 50% by weight or less, and particularly preferably 40% by weight or less. When the proportion of the structural unit (X) is equal to or lower than the upper limit value described above, it is possible to ensure moderate flexibility, without the characteristics of the structural unit (X) being excessively reflected on the characteristics of the modified epoxy resin.

The proportion of the structural unit (Y) in the modified epoxy resin is represented by the following equation (II).

Proportion (% by weight) of structural unit (Y) = (weight of structural unit (Y)) $\times$ 100)/weight of modified epoxy resin

The proportion of the structural unit (Y) can be calculated from the preparation weight ratio of the epoxy compound (A) and the acid-terminated polyester (B) at the time of production, by any manufacturer of the modified epoxy resin. Further, any user of the modified epoxy resin can calculate the proportion of the structural unit (Y), by carrying out a decomposition reaction of the modified epoxy resin, as necessary, performing a qualitative analysis and a quantitative analysis using a nuclear magnetic resonance apparatus, a mass spectrometer and a chromatograph, and analyzing the weight ratio of the constituent components.

The proportion of the structural unit (Y) is less than 100% by weight. However, the upper limit value thereof is preferably 99% by weight or less, more preferably 97% by weight or less, and still more preferably 95% by weight or less. When the proportion of the structural unit (Y) is equal to or lower than the upper limit value described above, there are tendencies, at the time of producing the modified epoxy resin, that the proportion of the structural unit (X) is not too small with respect to that of the structural unit (Y), that a homogeneous reaction can be more easily carried out, and that an excellent production stability can be obtained.

The lower limit value of the proportion of the structural unit (Y) is preferably 20% by weight or more, more preferably 30% by weight or more, still more preferably 40% by weight or more, yet still more preferably 50% by weight or more, and particularly preferably 60% by weight or more. When the proportion of the structural unit (Y) is equal to or higher than the lower limit value described above, it is possible to ensure moderate flexibility, without the characteristics of the structural unit (X) being excessively reflected on the characteristics of the modified epoxy resin.

[Physical Properties and Characteristics of Modified Epoxy Resin]

The lower limit value of the epoxy equivalent of the modified epoxy resin is 500 g/eq or more, preferably 750 g/eq or more, more preferably 1,000 g/eq or more, still more preferably 1,500 g/eq or more, and particularly preferably 2,000 g/eq or more.

When the epoxy equivalent is equal to or higher than the lower limit value described above, the glass transition temperature (Tg) of the modified epoxy resin can be improved. In cases where the modified epoxy resin is stored as a solid resin, it is possible to prevent the particles of the solid resin from fusing with one another (hereinafter, such a phenomenon is also referred to as "blocking") in a hot environment. Further, when the epoxy equivalent is equal to or higher than the lower limit value described above, it is also possible to improve the glass transition temperature (Tg) of a cured product and a cured coating film obtained by curing the modified epoxy resin (hereinafter, the cured product and/or the cured coating film is/are sometimes each simply referred to as "cured product").

On the other hand, the upper limit value of the epoxy equivalent of the modified epoxy resin is 10,000 g/eq or less, preferably 8,000 g/eq or less, more preferably 6,000 g/eq or less, and still more preferably 4,000 g/eq or less.

When the epoxy equivalent is equal to or lower than the upper limit value described above, a sufficient dissolution rate can be ensured when dissolving the resin in a solvent, and an increase in the viscosity of the resulting resin solution after dissolving the resin can also be reduced, making it possible to increase the solid content concentration of the solution. Therefore, the production efficiency of the modified epoxy resin, and the efficiency at the time of coating a coating material containing the modified epoxy resin can also be increased. Further, the softening point can be prevented from being too high, in the case of handling the modified epoxy resin as a solid resin. Therefore, it is possible to avoid inconvenience caused by too high a softening point; specifically, when it becomes necessary to raise the temperature at the time of melt kneading, it is possible to avoid the inconvenience that there will be fewer types of selectable latent curing agents, for example, in the case of kneading the modified epoxy resin with a latent curing agent. In addition, when the epoxy equivalent is equal to or lower than the upper limit value described above, the surface accuracy of a cured coating film obtained by curing the modified epoxy resin can also be improved, because the melt viscosity of the resin can be prevented from being too high when heat curing the resin.

The epoxy equivalent of the modified epoxy resin is measured by the method described in the section of EXAMPLES to be described later.

The lower limit value of the midpoint glass transition temperature (Tmg) of the modified epoxy resin is preferably 40°C or higher, more preferably 50°C or higher, still more preferably 55°C or higher, and particularly preferably 60°C or higher. This is because, when the midpoint glass transition temperature (Tmg) is equal to or higher than the lower limit value described above, a practical blocking resistance can be ensured, leading to an improved workability. Further, abnormalities are less likely to occur when the cured coating film containing the modified epoxy resin is brought into contact with hot water. The upper limit value of the midpoint glass transition temperature (Tmg) of the modified epoxy resin is preferably 150°C or lower, more preferably 120°C or lower, still more preferably 100°C or lower, and particularly preferably 75°C or lower. When the midpoint glass transition temperature (Tmg) is equal to or lower than the upper limit value described above, the melt viscosity can be prevented from being too high. As a result, the temperature at the time of kneading the modified epoxy resin with other components can be lowered to a relatively low temperature, making it possible to improve process passing properties in the production of a resin composition.

The lower limit value of the weight average molecular weight (Mw) of the modified epoxy resin is preferably 1,500 or more, more preferably 3,000 or more, still more preferably 5,000 or more, and particularly preferably 10,000 or more. When the weight average molecular weight is equal to or higher than the lower limit value described above, the glass transition temperature (Tg) is improved, making it possible to reduce blocking. When the weight average molecular weight of the modified epoxy resin is too low, the distance between crosslinking points is decreased, possibly resulting in the occurrence of problems such as: a cured product obtained by curing the resin becomes fragile; and the mechanical properties of the resulting cured coating film is decreased. Further, when the weight average molecular weight of the

modified epoxy resin is too low, the amount of unreacted residual components during the production tends to increase, depending on the structural unit (X) and the structural unit (Y) constituting the modified epoxy resin, possibly resulting in the occurrence of problems such as: a blocking which is more intense than that expected from the glass transition temperature (Tg) occurs; unreacted components volatilize during baking; and the resin does not dissolve and is separated when dissolved in a solvent, depending on the type of the solvent. In contrast, when the weight average molecular weight of the modified epoxy resin is equal to or higher than the lower limit value described above, the occurrence of such problems can be avoided.

On the other hand, the upper limit value of the weight average molecular weight (Mw) of the modified epoxy resin is 50,000 or less, preferably 45,000 or less, more preferably 40,000 or less, and still more preferably 20,000 or less. When the weight average molecular weight of the modified epoxy resin is too high, the softening point may be increased, possibly causing a necessity to increase the melting temperature at the time of melt kneading, or the surface accuracy of the resulting cured coating film may be impaired due to a high melt viscosity. Further, when the weight average molecular weight of the modified epoxy resin is too high, the formation of a network composed of a curing agent and the modified epoxy resin may fail to proceed smoothly at the time of curing a curable resin composition containing the modified epoxy resin, possibly resulting in a decrease in the mechanical properties of the coating film to be formed, or in a poor solvent resistance. In contrast, when the weight average molecular weight of the modified epoxy resin is equal to or lower than the upper limit value described above, the occurrence of such problems can be avoided.

The lower limit value of the molecular weight distribution (= weight average molecular weight (Mw)/number average molecular weight (Mn)) of the modified epoxy resin is preferably 1.5 or more, more preferably 2.0 or more, still more preferably 2.5 or more, and particularly preferably 3.0 or more. On the other hand, the upper limit value of the molecular weight distribution (Mw/ Mn) is preferably 20.0 or less, more preferably 10.0 or less, still more preferably 8.0 or less, and particularly preferably 5.0 or less.

The modified epoxy resin can be synthesized with good reproducibility by adjusting the value of the molecular weight distribution within the range described above. Further, when dissolving the modified epoxy resin in a solvent, the dissolution in the solvent proceeds starting from the components with relatively low molecular weight. Therefore, the dissolution in the solvent proceeds efficiently, by decreasing the difference in the polarity or the viscosity between the solvent and the modified epoxy resin. Likewise, when performing melt kneading, the melt kneading proceeds starting from the components with relatively low molecular weight. Therefore, the melt kneading can be performed efficiently, by decreasing the difference in the viscosity or the polarity between the modified epoxy resin and a curing agent or other epoxy resins to be melt-kneaded therewith.

The weight average molecular weight (Mw) and the number average molecular weight (Mn) of the epoxy resin can be measured by gel permeation chromatography (GPC method). A more specific example of the method will be described in the section of EXAMPLES to be described later.

The amount of bisphenol A is most preferably below the detection limit. However, there is a risk that bisphenol A is unintentionally mixed into the modified epoxy resin, during the production of the epoxy compound (A) and the acid-terminated polyester (B) as raw materials, and during the production of the modified epoxy resin, due to manufacturing reasons. As a result, there is a risk that a structure derived from bisphenol A is incorporated into the modified epoxy resin. In the present embodiment, it is preferred that the modified epoxy resin does not substantially contain bisphenol A. In other words, the amount of bisphenol A is preferably 50,000 ppm or less, with respect to the total weight of the modified epoxy resin.

[Method of Producing Modified Epoxy Resin]

The method of producing a modified epoxy resin, which is the second embodiment of the present invention, includes a reaction step of allowing an epoxy compound (A) represented by the following formula (4) to react with an acid-terminated polyester (B) represented by the following formula (5). In the reaction step, it is preferred to allow the epoxy compound (A), represented by the following formula (4), to react with the acid-terminated polyester (B), represented by the following formula (5), in the presence of a catalyst, at a suitable preparation ratio. Further, the modified epoxy resin to be produced by the production method according to the present embodiment is preferably the modified epoxy resin according to the first embodiment of the present invention.

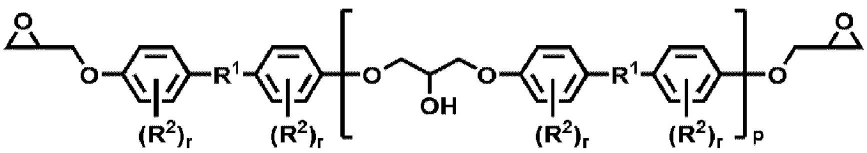

· · · (4)

In the formula (4), the definitions of p, r, $R^1$ and $R^2$ are the same as those of p, r, $R^1$ and $R^2$ in the formula (2),

respectively.

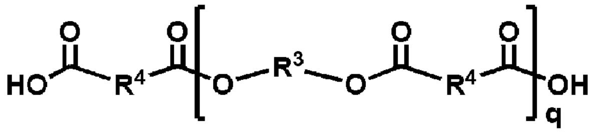

. . . (5)

In the formula (5), the definitions of $R^3$, $R^4$ and q are the same as those of $R^3$, $R^4$ and q in the formula (3), respectively.

[Epoxy Compound (A)]

The epoxy compound (A) represented by the formula (4) described above is a substance in which some or all of the hydrogen atoms bonded to the benzene rings of a bisphenol or a biphenol are substituted with an alkyl group having from 1 to 4 carbon atoms, and which has two glycidyl ether groups within the molecule. The epoxy compound (A) may be, for example, a compound in which some or all of the hydrogen atoms bonded to the benzene rings of a bisphenol diglycidyl ether, such as bisphenol A diglycidyl ether, bisphenol F diglycidyl ether, bisphenol E diglycidyl ether, bisphenol Z diglycidyl ether, bisphenol AP diglycidyl ether, bisphenol acetophenone diglycidyl ether, bisphenol trimethylcyclohexane diglycidyl ether or bisphenol fluorene diglycidyl ether, are substituted with a methyl group, an ethyl group, a propyl group, an isopropyl group, a butyl group, an isobutyl group or a t-butyl group; or a compound in which some or all of the hydrogen atoms bonded to the benzene rings of biphenol diglycidyl ether are substituted with a methyl group, an ethyl group, a propyl group, an isopropyl group, a butyl group, an isobutyl group or a t-butyl group.

The epoxy compound (A) is not particularly limited as long as the requirements of the formula (4) are met. However, a better intermolecular stacking is achieved, and the point impact strength and the cupping resistance of the resulting cured product is improved, when some or all of the hydrogen atoms of the benzene rings are substituted with a small alkyl group, and the crosslinking site between the benzene rings has a small structure. Specifically, the epoxy compound (A) is preferably a dimethylbisphenol A type epoxy resin (also referred to as "bisphenol C type epoxy resin"), a tetramethylbisphenol A type epoxy resin, a dimethylbisphenol F type epoxy resin, a tetramethylbisphenol F type epoxy resin, a dimethylbiphenol type epoxy resin or a tetramethylbiphenol type epoxy resin. From the viewpoint of availability, it is more preferred to use a dimethylbisphenol A type epoxy resin, a tetramethylbisphenol A type epoxy resin, a tetramethylbisphenol F type epoxy resin or a tetramethylbiphenol type epoxy resin, and it is particularly preferred to use a tetramethylbisphenol F type epoxy resin. This is because a moderately spread planar structure derived from an alkylbenzene and moderate flexibility of the crosslinked portion thereof improve the point impact resistance and the cupping resistance, when the resulting resin is formed into a cured coating film.

The epoxy compounds (A) exemplified above can be used singly, or a plurality of kinds thereof can be used in any combination and ratio. The epoxy compound or compounds (A) can be selected in view of the performances required for the modified epoxy resin or a cured product thereof, of interest, such as the glass transition temperature (Tg), the softening point, the point impact strength, the cupping resistance and the bending resistance, as well as the performances required depending on the application.

[Acid-terminated Polyester (B)]

The acid-terminated polyester (B) represented by the formula (8) is a carboxylic acid-terminated polyester resin produced by the polycondensation of a divalent carboxylic acid and a dihydric alcohol. As described above, in the present embodiment, the term "bifunctional" or "divalent or dihydric" used to describe a compound means that the compound is substantially bifunctional, and a trifunctional or higher functional compound may be included to the extent that the compound does not induce gelation during the production of the modified epoxy resin, namely, in an amount of 5% by weight or less.

$R^3$ in the formula (3) described above corresponds to a repeating structural unit derived from the dihydric alcohol to be described later, in the acid-terminated polyester (B), and $R^4$ corresponds to a repeating unit derived from the divalent carboxylic acid to be described later, in the acid-terminated polyester (B). In the formula (3) described above, each of $R^3$ and $R^4$ is sometimes referred to as a "compound unit" of the compound from which each repeating unit is derived.

The divalent carboxylic acid is usually used in the form of a free acid. However, an alkyl ester having from about 1 to 4 carbon atoms, or a derivative such as a halide or an alkali metal salt, of such a divalent carboxylic acid, can also be used as the divalent carboxylic acid. In the present embodiment, such a divalent carboxylic acid or a derivative thereof is collectively referred to as a "divalent carboxylic acid component".

Examples of the divalent carboxylic acid include, but not particularly limited to: aromatic dicarboxylic acids such

as isophthalic acid, terephthalic acid, isomers (specifically, 1,4-, 1,5-, 1,6-, 1,7-, 2,5-, 2,6-, 2,7- and 2,8-isomers) of naphthalenedicarboxylic acid, and furandicarboxylic acid; aliphatic dicarboxylic acids such as succinic acid, sebacic acid, isodecylsuccinic acid, dodecenylsuccinic acid, maleic acid, adipic acid, malonic acid, glutaric acid, pimelic acid, suberic acid, azelaic acid, undecanedioic acid, dodecanedioic acid, brassylic acid, tetradecanedioic acid, pentadecanedioic acid, thapsic acid, heptadecanedioic acid, dipropylmalonic acid, 3-ethyl-3-methylglutaric acid, 3,3-tetramethylene glutaric acid, dimer acid and hydrogenated dimer acid; and alicyclic dicarboxylic acids such as 1,1-cyclopropanedicarboxylic acid, 1,2-cyclopropanedicarboxylic acid, 1,1-cyclobutane dicarboxylic acid, 1,2-cyclobutane dicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, decahydro-1,4-naphthalenedicarboxylic acid, 2,3-norbornanedicarboxylic acid and 1,3-adamantane dicarboxylic acid. The divalent carboxylic acid is preferably selected from terephthalic acid and isophthalic acid, among those described above.

Examples of a trivalent or higher valent carboxylic acid component include, but not particularly limited to: trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid and 1,2,7,8-octanetetracarboxylic acid; and derivatives thereof.

These polycarboxylic acids may be used singly, or a plurality of kinds thereof may be used in any combination and ratio. When the trivalent or higher valent carboxylic acid component is used as the divalent carboxylic acid component, there is a risk that gel may be formed during the reaction with the epoxy compound (A) to cause defects in the production, or that the molecular weight distribution may be excessively widened to cause variations in the physical properties when the resulting resin is formed into a coating film. Therefore, it is preferred to use only the divalent carboxylic acid component. However, the trivalent or higher valent carboxylic acid component may be included to the extent that the defects as described above do not occur.

The dihydric alcohol is not particularly limited, but it is possible to use, for example, the following compounds. Specifically, examples of the dihydric alcohol include: diols consisting of an acyclic structure, such as ethylene glycol, polyethylene glycol, neopentyl glycol, propylene glycol, polypropylene glycol, 1,4-butanediol, polytetramethylene glycol, 1,5-pentanediol, polypentamethylene glycol, 1,6-hexandiol, polyhexamethylene glycol, 1,7-heptanediol, polyheptamethylene glycol, 1,8-octanediol and 1,10-decanediol; and diols having an alicyclic structure, such as dimer diol, 1,4-cyclohexanedimethanol, isosorbide and anhydroerythritol. The dihydric alcohol is preferably selected from ethylene glycol, propylene glycol, neopentyl glycol and 1,4-cyclohexanedimethanol, among those described above.

A trihydric or higher hydric alcohol is not particularly limited, and examples thereof include trimethylolpropane, pentaerythritol, xylitol, sucrose, and glucose.

These polyhydric alcohols may be used singly, or a plurality of kinds thereof may be used in any combination and ratio. When a trihydric or higher hydric alcohol is used as the dihydric alcohol, there is a risk that gel may be formed during the reaction with the epoxy compound (A) to cause defects in the production, or that the molecular weight distribution may be excessively widened to cause variations in the physical properties when the resulting resin is formed into a coating film. Therefore, it is preferred to use only a dihydric alcohol. However, a trihydric or higher hydric alcohol may be used to the extent that the defects as described above do not occur.

The method of producing the acid-terminated polyester (B) is not particularly limited, and a known method can be used for the production. For example, a monomer mixture containing a divalent carboxylic acid component, a dihydric alcohol component and the like is poured into a reaction vessel and heated, an esterification reaction or a transesterification reaction is carried out, and water or a dihydric alcohol component produced in the reaction is removed. Subsequently, a polycondensation reaction is carried out. At this time, the pressure in the reaction vessel is gradually reduced, and the polycondensation is performed under a vacuum of 150 mmHg (20 kPa) or less, preferably 15 mmHg (2 kPa) or less, while removing the dihydric alcohol component by distillation.

Examples of the catalyst to be used in the esterification reaction, the transesterification reaction or the polycondensation reaction include: titanium catalysts; calcium acetate; calcium acetate hydrate; tin catalysts such as dibutyltin oxide, tin acetate, tin disulfide, tin oxide and tin 2-ethylhexane zinc acetate; antimony trioxide; and germanium dioxide. Among these catalysts, a titanium catalyst is preferred as the catalyst, from the viewpoint of having a good reactivity.

The titanium catalyst may be, for example, a titanium alkoxide compound having an alkoxy group, a titanium carboxylate compound, titanyl carboxylate, a titanyl carboxylate salt or a titanium chelate compound.

Examples of the titanium alkoxide compound having an alkoxy group include tetramethoxytitanium, tetraethoxytitanium, tetrapropoxytitanium, tetrabutoxytitanium, tetrapentoxytitanium and tetraoctoxytitanium.

Examples of the titanium carboxylate compound include titanium formate, titanium acetate, titanium propionate, titanium octoate, titanium oxalate, titanium succinate, titanium maleate, titanium adipate, titanium sebacate, titanium hexanetricarboxylate, titanium isooctanetricarboxylate, titanium octanetetracarboxylate, titanium decanetetracarboxylate, titanium benzoate, titanium phthalate, titanium terephthalate, titanium isophthalate, titanium 1,3-naphthalenedicarboxylate, titanium 4,4-biphenyldicarboxylate, titanium 2,5-toluenedicarboxylate, titanium anthracenedicarboxylate, titanium trimellitate, titanium 2,4,6-naphthalenetricarboxylate, titanium pyromellitate and titanium 2,3,4,6-naphthalenetetracarboxylate.

Among these titanium catalysts, tetrabutoxytitanium is preferred.

These titanium catalysts may be used singly, or two or more kinds thereof may be used in any combination and ratio.

The reaction temperature of the esterification reaction or the transesterification reaction, and of the polycondensation reaction is preferably within the range of from 150 to 300°C. Good productivity tends to be obtained when the reaction temperature is 150°C or higher, and the decomposition of the resulting acid-terminated polyester (B) can be inhibited when the reaction temperature is 300°C or lower. The lower limit value of the reaction temperature is more preferably 180°C or higher, and the upper limit value thereof is more preferably 280°C or lower.

The amount of the catalyst to be used is preferably within the range of from 10 ppm to 10,000 ppm with respect to the total weight of the divalent carboxylic acid component and the dihydric alcohol component, from the viewpoint of ensuring polymerization reactivity.

The lower limit value of the weight average molecular weight (Mw) of the acid-terminated polyester (B) is preferably 1,000 or more, more preferably 1,500 or more, and particularly preferably 2,000 or more. On the other hand, the upper limit value of the weight average molecular weight (Mw) is preferably 10,000 or less, more preferably 9,000 or less, and particularly preferably 8,000 or less. When the upper limit value and the lower limit value described above are satisfied, the proportion of the structural unit (Y) in the modified epoxy resin can be adjusted to a suitable range. As a result, the glass transition temperature (Tg) can be adjusted to a suitable range, making it possible to obtain a cured product or a cured coating film having excellent mechanical properties.

The molecular weight distribution (= weight average molecular weight (Mw)/number average molecular weight (Mn)) of the acid-terminated polyester (B) is preferably 1.1 or more, more preferably 1.2 or more, still more preferably 1.3 or more, yet still more preferably 1.5 or more, and particularly preferably 2.0 or more from the viewpoint of the availability of the raw materials. Further, the molecular weight distribution (Mw/Mn) is preferably 10.0 or less, more preferably 5.0 or less, and particularly preferably 4.3 or less, from the viewpoint of forming a three-dimensional network structure as designed, to improve the mechanical properties of the resulting coating film.

The weight average molecular weight (Mw) and the number average molecular weight (Mn) of the acid-terminated polyester (B) can be measured by gel permeation chromatography (GPC method). In the GPC method, polystyrene is used as a standard polymer. The specific method of measuring Mw and Mn is as described later in the section of EXAMPLES.

The glass transition temperature (Tg) of the acid-terminated polyester (B) is not particularly limited. However, Tg is preferably 0°C or higher, more preferably 5°C or higher, still more preferably 10°C or higher, and particularly preferably 20°C or higher from the viewpoint of heat resistance. Further, Tg is preferably 100°C or lower, more preferably 95°C or lower, still more preferably 90°C or lower, and particularly preferably 80°C or lower from the viewpoint of the handleability in the synthesis.

The hydroxyl value of the acid-terminated polyester (B) is not particularly limited. However, the hydroxyl value is preferably 0.001 mg KOH/g or more, more preferably 0.005 mg KOH/g or more, and particularly preferably 0.01 mg KOH/g or more from the viewpoint of raw material availability. Further, the hydroxyl value of the acid-terminated polyester (B) is preferably 60 mg KOH/g or less, more preferably 50 mg KOH/g or less, still more preferably 40 mg KOH/g or less, and particularly preferably 30 mg KOH/g or less, from the viewpoint that the polymerization reaction with the epoxy compound (A) can be carried out smoothly.

The acid value of the acid-terminated polyester (B) is not particularly limited. However, the acid value is preferably 10 mg KOH/g or more, and more preferably 20 mg KOH/g or more. Further, the acid value is preferably 100 mg KOH/g or less, more preferably 90 mg KOH/g or less, and still more preferably 80 mg KOH/g or less. When the acid value is adjusted within the range described above, it is possible to adjust the proportion of the epoxy compound (A) in the modified epoxy resin, and to impart excellent mechanical properties to the resulting cured product or cured coating film.

The specific methods of measuring the glass transition temperature (Tg), the hydroxyl value and the acid value of the acid-terminated polyester (B) are as described later in the section of EXAMPLES.

A single type of the acid-terminated polyester (B) may be used, or alternatively, a plurality of types of the acid-terminated polyesters (B) differing in the type(s) of the divalent carboxylic acid component and/or the dihydric alcohol, or a plurality of types of the acid-terminated polyesters (B) differing in the physical properties, can be used in any combination and ratio.

[Catalyst (C)]

A catalyst (C) may be used in the reaction step. The catalyst (C) is not particularly limited, as long as the catalyst is one usually used in the advance method in the method of producing an epoxy resin.

The catalyst (C) may be, for example, an alkali metal compound, an organic phosphorus compound, a tertiary amine, a quaternary ammonium salt, a cyclic amine or an imidazole.

Specific examples of the alkali metal compound include: alkali metal hydroxides such as sodium hydroxide, lithium hydroxide and potassium hydroxide; alkali metal salts such as sodium carbonate, sodium bicarbonate, sodium chloride, lithium chloride and potassium chloride; alkali metal alkoxides such as sodium methoxide and sodium ethoxide; hydrides of alkali metals, such as alkali metal phenoxides, sodium hydroxide and lithium hydride; and alkali metal salts of organic acids, such as sodium acetate and sodium stearate.

Specific examples of the organic phosphorus compound include triphenylphosphine, tri-o-tolyl phosphine, tri-m-tolyl phosphine, tri-p-tolyl phosphine, tri-2,4-xylylphosphine, tri-2,5-xylylphosphine, tri-3,5-xylylphosphine, tris(p-tert-butylphenyl)phosphine, tris(p-methoxyphenyl)phosphine, tris(p-tert-butoxy phenyl)phosphine, tri(p-n-octylphenyl)phosphine, tri(p-n-nonylphenyl)phosphine, triallylphosphine, tributylphosphine, trimethylphosphine, tribenzylphosphine, triisobutylphosphine, tri-tert-butylphosphine, tri-n-octyl phosphine, tricyclohexylphosphine, tri-n-propylphosphine, di-t-butylmethylphosphine, tri-n-butylphosphine, cyclohexyl-di-tert-butylphosphine, diethylphenylphosphine, di-n-butylphenylphosphine, di-tert-butylphenylphosphine, methyldiphenylphosphine, ethyldiphenylphosphine, diphenylpropylphosphine, isopropyldiphenylphosphine, cyclohexyldiphenylphosphine, tetramethylphosphonium bromide, tetramethylphosphonium iodide, tetramethylphosphonium hydroxide, trimethylcyclohexylphosphonium chloride, trimethylcyclohexylphosphonium bromide, trimethylbenzylphosphonium chloride, trimethylbenzylphosphonium bromide, tetraphenylphosphonium bromide, triphenylmethylphosphonium bromide, triphenylmethylphosphonium iodide, triphenylethylphosphonium chloride, triphenylethylphosphonium bromide, triphenylethylphosphonium iodide, triphenylbenzylphosphonium chloride and triphenylbenzylphosphonium bromide.

Specific examples of the tertiary amine include triethylamine, tri-n-propylamine, tri-n-butylamine, triethanolamine and N,N-dimethylbenzylamine.

Specific examples of the quaternary ammonium salt include tetramethylammonium chloride, tetramethylammonium bromide, tetramethylammonium hydroxide, triethylmethylammonium chloride, tetraethylammonium chloride, tetraethylammonium bromide, tetraethylammonium iodide, tetrapropylammonium bromide, tetrapropylammonium hydroxide, tetrabutylammonium chloride, tetrabutylammonium bromide, tetrabutylammonium iodide, benzyltrimethylammonium chloride, benzyltrimethylammonium bromide, benzyltrimethylammonium hydroxide, benzyltributylammonium chloride and phenyltrimethylammonium chloride.

Specific examples of the cyclic amine include 1,8-diazabicyclo(5,4,0)-7-undecene and 1,5-diazabicyclo(4,3,0)-5-nonene.

Specific examples of the imidazole include 2-methylimidazole, 2-ethyl-4-methylimidazole and 2-phenylimidazole.

Among these, it is preferred to use a tertiary amine having a boiling point equal to or higher than the reaction temperature, as the catalyst (C), from the viewpoint of enabling the production of a modified epoxy resin with a narrow molecular weight distribution.

The catalysts (C) exemplified above may be used singly, or two or more kinds thereof may be used in any combination and ratio.

In the case of using the catalyst (C), the amount thereof to be used is usually set to 10,000 weight ppm or less, for example, preferably within the range of from 10 to 5,000 weight ppm, with respect to the amount of the epoxy compound (A) to be used.

[Reaction Solvent (D)]

In the reaction step, a reaction solvent (D) may be used. The reaction solvent (D) may be any solvent as long as the solvent dissolves the raw materials, but is usually an organic solvent.

The organic solvent may be, for example, an aromatic solvent, a ketone solvent, an amide solvent, or a glycol ether solvent.

Specific examples of the aromatic solvent include benzene, toluene, and xylene.

Specific examples of the ketone solvent include acetone, methyl ethyl ketone, methyl isobutyl ketone, 2-heptanone, 4-heptanone, 2-octanone, cyclopentanone, cyclohexanone and acetylacetone.

Specific examples of the amide solvent include formamide, N-methylformamide, N,N-dimethylformamide, acetamide, N-methylacetamide, N,N-dimethylacetamide, 2-pyrrolidone and N-methyl-2-pyrrolidone.

Specific examples of the glycol ether solvent include ethylene glycol monomethyl ether, ethylene glycol monoethyl ether, ethylene glycol mono-n-butyl ether, ethylene glycol dimethyl ether, ethylene glycol monoethyl ether acetate, diethylene glycol monomethyl ether, diethylene glycol monoethyl ether, diethylene glycol mono-n-butyl ether, diethylene glycol dimethyl ether, diethylene glycol monoethyl ether acetate, propylene glycol monomethyl ether, propylene glycol mono-n-butyl ether and propylene glycol monomethyl ether acetate.

The reaction solvents (D) exemplified above may be used singly, or two or more kinds thereof may be used in any combination and ratio.

In cases where a high viscosity product is produced during the reaction, it is also possible to further add the

reaction solvent (D) and continue the reaction.

[Reaction Conditions]

The reaction of the epoxy compound (A) with the acid-terminated polyester (B) can be carried out under any of normal, pressurized and reduced pressure conditions.

The reaction temperature is usually within the range of from 60 to 240°C, preferably from 80 to 220°C, and more preferably from 100 to 200°C. The reaction temperature is preferably equal to or higher than the lower limit value described above, because it facilitates the progression of the reaction. Further, the reaction temperature is preferably equal to or lower than the upper limit value described above from the viewpoint of obtaining a high-purity modified epoxy resin, because side reactions are less likely to proceed.

The reaction time is not particularly limited, and is usually within the range of from 0.5 to 24 hours, preferably from 1 to 22 hours, and more preferably from 1.5 to 20 hours. The reaction time is preferably equal to or lower than the upper limit value described above from the viewpoint of improving the production efficiency, and is preferably equal to or higher than the lower limit value described above from the viewpoint that unreacted components can be reduced.

[Diluting Solvent (E)]

In the reaction step, a diluting solvent (E) may be added to the modified epoxy resin after the completion of the reaction, for the purpose of adjusting the solid content concentration. The diluting solvent (E) may be any solvent as long as the solvent dissolves the modified epoxy resin, but is usually an organic solvent. Specific examples of the organic solvent which can be used include those exemplified for the reaction solvent (D) described above.

In the present embodiment, the term "solvent ("youbai" in Japanese)" is used to refer to a solvent used during the reaction, and the term "solvent ("youzai" in Japanese)" is used to refer to a solvent used after the completion of the reaction. However, the same type or different types of solvents may be used as the "solvent ("youbai" in Japanese)" and the "solvent ("youzai" in Japanese)".

[Curable Resin Composition]

The curable resin composition according to the third embodiment of the present invention contains at least the modified epoxy resin according to the first embodiment of the present invention, and a curing agent. If necessary, the curable resin composition according to the present embodiment can contain an epoxy compound (hereinafter, also referred to as an/the "other epoxy compound") other than the modified epoxy resin according to the first embodiment of the present invention, a curing accelerator, other components and the like, as appropriate.

[Curing Agent]

The curing agent to be used in the curable resin composition according to the present embodiment is a substance that contributes to a crosslinking reaction and/or a chain extension reaction between the epoxy groups of the epoxy resin. In the present specification, any substance that contributes to the crosslinking reaction and/or the chain extension reaction between the epoxy groups of the epoxy resin, is regarded as a curing agent, even if the substance is usually referred to as a "curing accelerator".

In the curable resin composition according to the present embodiment, it is preferred to use, as the curing agent, at least one selected from the group consisting of a multifunctional phenol, a polyisocyanate compound, an amine compound, an acid anhydride compound, an acid-terminated polyester resin, an imidazole compound, an amide compound, a cationic polymerization initiator, an organic phosphine, a phosphonium salt and a tetraphenylboron salt.

Examples of the multifunctional phenol include: bisphenols such as bisphenol A, bisphenol F, bisphenol S, bisphenol B, bisphenol AD, bisphenol Z and tetrabromobisphenol A; biphenyl skeleton-containing biphenols such as 4,4'-biphenol and 3,3',5,5'-tetramethyl-4,4'-biphenol; dihydroxybenzenes such as catechol, resorcinol and hydroquinone; dihydroxynaphthalenes; and those in which the hydrogen atom bonded to the aromatic ring of these compounds is substituted with a non-interfering substituent, such as a halogen group, an alkyl group, an aryl group, an ether group, an ester group, or an organic substituent containing a hetero element such as sulfur, phosphorus or silicon.

Examples further include novolacs and resols which are polycondensates of these multifunctional phenols or monofunctional phenols such as phenol, cresol and alkylphenols, with aldehydes.

Examples of the polyisocyanate compound include tolylene diisocyanate, methylcyclohexane diisocyanate, diphenylmethane diisocyanate, dicyclohexylmethane diisocyanate, isophorone diisocyanate, hexamethylene diisocyanate, xylylene diisocyanate, hydrogenated xylylene diisocyanate, dimer acid diisocyanate, trimethylhexamethylene diisocyanate and lysine triisocyanate. Examples further include polyisocyanate compounds obtained by the reaction

of these polyisocyanate compounds with compounds having at least two active hydrogen atoms in an amino group, a hydroxyl group, a carboxyl group, water or the like; and trimers to pentamers of the above-described polyisocyanate compounds.

Examples of the amine compound include aliphatic primary amines, aliphatic secondary amines, aliphatic tertiary amines, aromatic primary amines, aromatic secondary amines, aromatic tertiary amines, cyclic amines, guanidines and urea derivatives. Specific examples of the amine compound include triethylenetetramine, diaminodiphenylmethane, diaminodiphenyl ether, m-xylenediamine, dicyandiamide, 1,8-diazabicyclo(5,4,0)-7-undecene, 1,5-diazabicyclo(4,3,0)-5-nonene, dimethylurea and guanylurea.

Examples of the acid anhydride compound include phthalic anhydride, hexahydrophthalic anhydride, trimellitic anhydride, and condensates of maleic anhydride and unsaturated compounds.

Examples of the acid-terminated polyester resin include polycondensates obtained by allowing the divalent carboxylic acids with dihydric alcohols, which are exemplified in the section of [Acid-terminated Polyester (B)]. It is preferred to contain more than 0 mol% of any of the trivalent or higher valent carboxylic acids and/or the trihydric or higher hydric alcohols exemplified in the section of [Acid-terminated Polyester (B)], because the formation of a network structure during curing can be accelerated.

Examples of the imidazole compound include 1-isobutyl-2-methylimidazole, 2-methylimidazole, 1-benzyl-2-methylimidazole, 2-ethyl-4-methylimidazole, 2-phenylimidazole and benzimidazole. The imidazole compound also functions as the curing accelerator to be described later, but is classified as a curing agent in the present embodiment.

Examples of the amide compound include dicyandiamide, dicyandiamide derivatives, and polyamide resins.

The cationic polymerization initiator is a substance that generates cations by heat or active energy ray irradiation, and may be, for example, an aromatic onium salt. The aromatic onium salt may specifically be, for example, a compound composed of an anion component such as $SbF_6^-$, $BF_4^-$, $AsF_6^-$, $PF_6^-$, $CF_3SO_3^{2-}$ or $B(C_6F_5)_4^-$, and an aromatic onium component containing an atom such as iodine, sulfur, nitrogen or phosphorus. In particular, a diaryliodonium salt, a triarylsulfonium salt or the like is preferred.

Examples of the organic phosphine include tributylphosphine, methyldiphenylphosphine, triphenylphosphine, diphenylphosphine and phenylphosphine.

Examples of the phosphonium salt include tetraphenylphosphonium tetraphenylborate, tetraphenylphosphonium ethyltriphenylborate and tetrabutylphosphonium tetrabutylborate.

Examples of the tetraphenylboron salt include 2-ethyl-4-methylimidazole tetraphenylborate and N-methylmorpholine tetraphenylborate.

The content of the curing agent in the curable resin composition according to the present embodiment is preferably 0.1 parts by weight or more, more preferably 0.5 parts by weight or more, and still more preferably 1 part by weight or more, and at the same time, preferably 1,000 parts by weight or less, more preferably 100 parts by weight or less, still more preferably 80 parts by weight or less, and particularly preferably 60 parts by weight or less, with respect to 100 parts by weight of the modified epoxy resin according to the first embodiment of the present invention.

In cases where the curable resin composition according to the present embodiment contains the other epoxy compound, the content of the curing agent is preferably 0.1 parts by weight or more, more preferably 0.5 parts by weight or more, and still more preferably 1 part by weight or more, and at the same time, preferably 1,000 parts by weight or less, more preferably 100 parts by weight or less, still more preferably 80 parts by weight or less, and particularly preferably 60 parts by weight or less, with respect to 100 parts by weight of the total epoxy component as the solid content.

A more preferred amount of the curing agent is as described below, depending on the type of each curing agent.

In the case of using the multifunctional phenol, the amine compound, the acid anhydride compound or the acid-terminated polyester resin as the curing agent, the curing agent is preferably used in such an amount that the equivalence ratio of functional groups (hydroxyl groups of the multifunctional phenol, amino groups of the amine compound, acid anhydride groups of the acid anhydride compound or carboxyl groups of the acid-terminated polyester resin) in the curing agent to the total epoxy groups in the curable resin composition, is within the range of from 0.8 to 1.5.

In the case of using the polyisocyanate compound, the polyisocyanate compound is preferably used in such an amount that the equivalence ratio of the number of isocyanate groups in the polyisocyanate compound to the number of hydroxyl groups in the curable resin composition, is within the range of from 1:0.01 to 1:1.5.

In the case of using the imidazole compound, the imidazole compound is preferably used within the range of from 0.5 to 10 parts by weight, with respect to 100 parts by weight of the total epoxy component as the solid content in the curable resin composition.

In the case of using the amide compound, the amide compound is preferably used within the range of from 0.1 to 20% by weight, with respect to the total weight of the total epoxy component as the solid content in the curable resin composition and the amide compound.

In the case of using the cationic polymerization initiator, the cationic polymerization initiator is preferably used within the range of from 0.01 to 15 parts by weight, with respect to 100 parts by weight of the total epoxy component as the solid content in the curable resin composition.

In the case of using the organic phosphine, the phosphonium salt or the tetraphenylboron salt, each compound is preferably used within the range of from 0.1 to 20% by weight, with respect to the total weight of the total epoxy component as the solid content in the curable resin composition, and the organic phosphine, the phosphonium salt or the tetraphenylboron salt.

In the present embodiment, the term "solid content" refers to components excluding solvents, and the definition thereof includes not only an epoxy resin or an epoxy compound which is solid, but also one in the form of a semisolid or a viscous liquid. The term "total epoxy component" refers to the total of the modified epoxy resin according to the first embodiment of the present invention and the other epoxy compound(s).

In the curable resin composition according to the present embodiment, it is also possible to use, for example, a mercaptan compound, an organic acid dihydrazide, a boron halide-amine complex or the like as the curing agent, in addition to the curing agents described above.

These curing agents may be used singly, or two or more kinds thereof may be used in any combination and ratio.

[Other Epoxy Compound]

The curable resin composition according to the present embodiment can contain an epoxy compound (other epoxy compound) other than the modified epoxy resin according to the first embodiment of the present invention.

Examples of the other epoxy compound include: glycidyl ether type aromatic epoxy resins such as bisphenol A type epoxy resins, bisphenol F type epoxy resins, bisphenol S type epoxy resins, biphenyl type epoxy resins, phenol novolac type epoxy resins, cresol novolac type epoxy resins, bisphenol A novolac type epoxy resins, tetrabromobisphenol A type epoxy resins, and other multifunctional phenolic epoxy resins; epoxy resins obtained by hydrogenating the aromatic rings of the glycidyl ether type aromatic epoxy resins described above; glycidyl ester type epoxy resins; glycidyl amine type epoxy resins; linear aliphatic epoxy resins; alicyclic epoxy resins; and epoxy compounds such as heterocyclic epoxy resins. In addition to these epoxy compounds, it is also possible to use: a resin containing a glycidyl group, such as a polymer containing glycidyl (meth)acrylate; triglycidyl isocyanurate; or the like, as the other epoxy compound. The other epoxy compounds described above may be used singly, or two or more kinds thereof may be used in any combination and ratio.

In cases where the curable resin composition according to the present embodiment contains the modified epoxy resin according to the first embodiment of the present invention, and the other epoxy compound, the proportion of the other epoxy compound in the total epoxy component as the solid content in the curable resin composition is preferably 1% by weight or more, and more preferably 5% by weight or more, and at the same time, preferably 99% by weight or less, and more preferably 95% by weight or less. When the proportion of the other epoxy compound is equal to or higher than the lower limit value described above, it is possible to sufficiently obtain the effect of improving the physical properties due to incorporating the other epoxy compound. When the proportion of the other epoxy compound is equal to or lower than the upper limit value described above, on the other hand, it is possible to obtain the effect of improving the impact strength and the bending resistance, provided by the modified epoxy resin according to the first embodiment of the present invention.

[Solvent]

The curable resin composition according to the present embodiment may be diluted by adding a solvent, in order to moderately adjust the viscosity of the curable resin composition during handling, such as, for example, at the time of forming a coating film. In the curable resin composition according to the present embodiment, the solvent is used to ensure the handleability and workability in the shaping of the curable resin composition, and the amount of the solvent to be used is not particularly limited. As described above, the term "solvent ("youzai" in Japanese)" and the term "solvent ("youbai" in Japanese)" are distinguished in the present embodiment, depending on the context of use. However, the same type or different types of solvents may be used as each of the "solvent ("youzai" in Japanese)" and the "solvent ("youbai" in Japanese)", independently.

It is possible to use one or more kinds of organic solvents exemplified as the reaction solvent (D) to be used in the production of the modified epoxy resin according to the first embodiment of the present invention, as the solvent which can be contained in the curable resin composition according to the present embodiment.

[Other Components]

The curable resin composition according to the present embodiment can contain other components, in addition to the components described above. Examples of the other components include a curing accelerator (however, those corresponding to the above-described curing agent are excluded), a coupling agent, a flame retardant, an antioxidant, a photostabilizer, a plasticizer, a reactive diluent, a pigment, an inorganic filler and an organic filler. The other components described above can be used in an appropriate combination, depending on the desired physical properties of the curable

resin composition.

[Confirmation of Incorporated Components]

The fact that the modified epoxy resin according to the first embodiment of the present invention and other components are incorporated in the curable resin composition according to the present embodiment can be confirmed by: performing the separation and purification of the curable resin composition; and then carrying out a qualitative analysis or a quantitative analysis, using an apparatus selected from a nuclear magnetic resonance apparatus, a mass spectrometer or a chromatograph, depending on the target components.

[Cured Product]

A cured product can be obtained by curing the curable resin composition according to the present embodiment. The term "curing/to cure" as used herein refers to intentionally curing the epoxy resin by heat, light and/or the like. The degree of the above-described curing can be controlled depending on the desired physical properties, application, and the like.

The method of curing the curable resin composition according to the present embodiment when curing the composition to form a cured product, varies depending on the types and the amounts of the components incorporated in the curable resin composition, and the form of the formulation, and the like. However, the curing is usually carried out, for example, under heating conditions of a temperature of from 50 to 200°C for a period of from 5 seconds to 180 minutes. From the viewpoint of reducing curing defects, the heating is preferably carried out in two stages consisting of: a primary heating performed at a temperature of from 50 to 160°C for a period of from 5 seconds to 30 minutes; and a secondary heating performed at a temperature of from 90 to 200°C, which is 40 to 120°C higher than the temperature of the primary heating, for a period of from 1 minute to 150 minutes.

In the case of producing the cured product as a semi-cured product, the curing reaction of the curable resin composition can be allowed to proceed to the extent that the shape of the cured product can be retained, by heating or the like. In cases where the curable resin composition contains a solvent, most of the solvent is removed by a method such as heating, decompression, air drying or the like. However, 5% by weight or less of the solvent may remain in the semi-cured product.

The fact that the modified epoxy resin according to the first embodiment of the present invention is contained in the resulting cured product can be confirmed by identifying the modified epoxy resin of the present invention in the cured product, by subjecting the cured product to infrared spectroscopy.

[Application]

The modified epoxy resin according to the first embodiment of the present invention has a structure different from that of a bisphenol A type epoxy resin, and is capable of giving a cured product, a cured coating film or the like which has an adhesion, a coating film hardness, a cupping resistance, a point impact resistance, a bending resistance and a hot water resistance that are equal to or higher than those of a cured product of a conventional high molecular weight bisphenol A type epoxy resin.

The modified epoxy resin according to the first embodiment of the present invention, a curable resin composition containing the modified epoxy resin, and a cured product of the curable resin composition, can be used in a number of applications, for example, mainly in the field of coating materials, the field of civil engineering and the electric field, because of their excellent electrical properties, adhesion, heat resistance and the like. Above all, the modified epoxy resin is suitably used as: a binder for a coating material such as a coating composition for powder coating or coating composition for a can; a binder for an adhesive; a base material for a prepreg; a base material for a laminated plate; a base material for a fiber-reinforced plastic (FRP); an electric/electronic material; or the like. Further, a coating film including the cured product can be suitably used in a member for a can and a can using the same, by forming the coating film on the surface of a substrate for a can.

EXAMPLES

The present invention will now be described more specifically based on Examples. However, the present invention is in no way limited to the following Examples. The values of various production conditions and evaluation results in the following Examples have meanings as preferred upper limit or lower limit values in the embodiments of the present invention, and preferred ranges may each be a range defined by a combination of any of the above-described upper limit or lower limit values and a value in the following Examples, or a combination of values in Examples.

[Raw Materials Used]

In the following Examples and Comparative Examples, the following compounds were used as the epoxy compound (A) and the acid-terminated polyester (B).

[Epoxy Compound (A)]

Any one of the following A-1 to A-5 was used as the epoxy compound (A).

A-1: high molecular weight bisphenol A type epoxy resin (jER (registered trademark) 1009F, epoxy equivalent: 1993 g/eq, solid; manufactured by Mitsubishi Chemical Corporation)
A-2: bisphenol A type epoxy resin (jER (registered trademark) 828US, epoxy equivalent: 186 g/eq; manufactured by Mitsubishi Chemical Corporation)
A-3: hydrogenated bisphenol A type epoxy resin (HBE-100, epoxy equivalent: 215 g/eq; manufactured by New Japan Chemical Co., Ltd.)
A-4: 1,6-hexandiol type epoxy resin (epoxy equivalent: 116 g/eq)
A-5: tetramethylbisphenol F type epoxy resin (epoxy equivalent: 193 g/eq)
A-6: tetramethylbiphenol type epoxy resin (jER (registered trademark) YX4000, epoxy equivalent: 186 g/eq; manufactured by Mitsubishi Chemical Corporation)
A-7: bisphenol F type epoxy resin (jER (registered trademark) 806H, epoxy equivalent: 186 g/eq; manufactured by Mitsubishi Chemical Corporation)

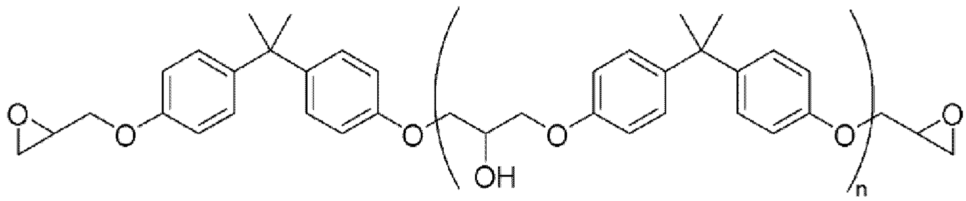
A－1

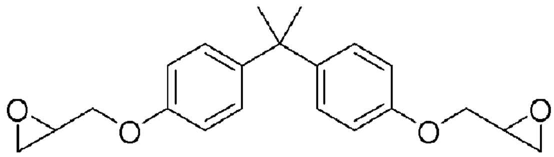
A－2

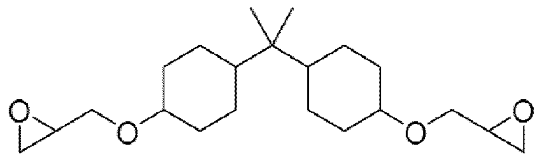
A－3

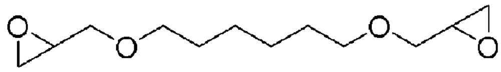
A－4

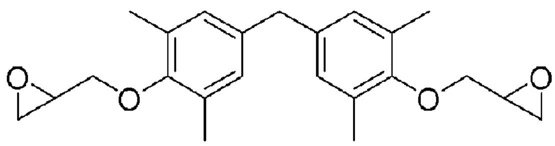
A－5

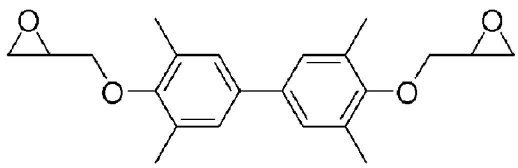
A－6

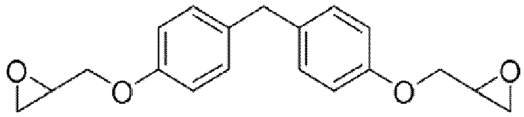

A−7

[Acid-terminated Polyester (B)]

B-1 or B-2 shown in Table 1 was used as the acid-terminated polyester (B). Each compound was obtained by allowing the divalent carboxylic acids to react with the dihydric alcohols, which are shown in Table 1, at the preparation compositions shown in Table 1.

In Table 1, the abbreviations for the divalent carboxylic acids, the dihydric alcohols and the catalyst are as follows.

TPA: terephthalic acid
IPA: isophthalic acid
EG: ethylene glycol
NPG: neopentyl glycol
CHDM: 1,4-cyclohexanedimethanol
TBT: tetrabutoxytitanium

[Table 1]

| | | | | B-1 | B-2 |
|---|---|---|---|---|---|
| Preparation composition | Divalent carboxylic acids | TPA | mol% | 40 | 40 |
| | | IPA | mol% | 60 | 60 |
| | Dihydric alcohols | EG | mol% | 60 | 60 |
| | | NPG | mol% | 40 | - |
| | | CHDM | mol% | - | 40 |
| | Molar ratio | Dihydric alcohols / Divalent carboxylic acids | | 0.90 | 0.90 |
| | Catalyst | TBT | Weight ppm | 1,000 | 1,000 |
| Analysis values | | Tg | °C | 57.3 | 61.1 |
| | | Acid value | mg KOH / g | 62.4 | 59.6 |
| | | Acid equivalent | g / eq | 899 | 941 |
| | | Hydroxyl value | mg KOH / g | 2.4 | 5.7 |
| | | Mw | - | 2,700 | 3,100 |
| | | Mn | - | 1,100 | 1,200 |
| | | Mw / Mn | - | 2.3 | 2.6 |

The method for producing B-1 or B-2, as well as the methods of measuring the acid value, the acid equivalent, the hydroxyl value, the glass transition temperature, the weight average molecular weight and the number average molecular weight of each resulting acid-terminated polyester (B), are as follows.

< Method of Producing B-1 or B-2 >

For each of B-1 and B-2, the divalent carboxylic acids and the dihydric alcohols shown in Table 1 were poured into a reaction vessel equipped with a distillation column, at the molar ratio shown in Table 1. Further, 1,000 weight ppm of tetrabutoxytitanium with respect to the total weight of the above-described components were poured into the reaction vessel. Subsequently, the mixture of these components was stirred with heating so that the temperature in the reaction system was adjusted to 265°C, and this temperature was maintained. After the esterification reaction had been completed and the distillation of water from the reaction system had stopped, the pressure in the reaction system was reduced while maintaining the temperature in the reaction system at 265°C, to carry out a condensation reaction while removing

polyhydric alcohols by distillation from the reaction system.

The viscosity of the reaction system increased as the reaction proceeded, and the stirring was stopped when the torque of the stirring blade reached a predetermined torque. Thereafter, the pressure of the reaction system was allowed to return to normal pressure, and pressurized with nitrogen to collect the resulting reaction product, thereby obtaining B-1 or B-2.

< Acid Value and Acid Equivalent >

The acid value of the acid-terminated polyester (B) was measured by the following procedure.

About 0.2 g of the acid-terminated polyester (B) was precisely weighed (X (g)) into a branched Erlenmeyer flask, 10 mL of benzyl alcohol was added thereto, and the mixture was heated by a heater at 230°C for 15 minutes under a nitrogen atmosphere, to obtain a solution. The resulting solution was allowed to cool to room temperature. Thereafter, 10 mL of benzyl alcohol, 20 mL of chloroform and few drops of a phenolphthalein solution were added to the resulting solution, to obtain a sample for titration. The thus obtained sample for titration was titrated with a 0.02 normal KOH solution (titration amount = Y (mL), titer of KOH solution = p). A blank measurement was carried out in the same manner (titration amount = Z (mL)), and the acid value was calculated in accordance with the following equation.

$$\text{Acid value (mg KOH/g)} = \{(Y - Z) \times 0.02 \times 56.11 \times p\}/X$$

Subsequently, the acid equivalent was calculated from the resulting acid value (mg KOH/g), in accordance with the following equation.

$$\text{Acid equivalent (g/eq)} = 56.11/\text{acid value (mg KOH/g)} \times 1{,}000$$

< Hydroxyl Value >

The hydroxyl value of the acid-terminated polyester (B) was measured by the following procedure.

About 5 g of the acid-terminated polyester (B) was precisely weighed (Q (g)) into a branched Erlenmeyer flask, and 50 mL of THF was added thereto to completely dissolve the acid-terminated polyester (B), to prepare a "solution 1".

To the "solution 1" was added 30 mL of a THF solution of dimethylaminopyridine, obtained by dissolving 5 g of N,N-dimethylaminopyridine in 500 mL of THF, to prepare a "solution 2".

To 22 mL of acetic anhydride was added 200 mL of THF, to prepare a THF solution of acetic anhydride. To the "solution 2" was added 10 mL of the thus prepared solution, and the resulting mixture was mixed for 20 minutes to prepare a "solution 3".

To the "solution 3" was added 3 mL of ion exchanged water, and the resulting mixture was mixed for 20 minutes to prepare a "solution 4".

To the "solution 4" was added 50 mL of THF to prepare a "solution 5".

To the "solution 5" were added to 25 mL of a 0.5 N KOH methanol solution, and a phenolphthalein indicator to prepare a "solution 6".

The thus prepared "solution 6" was titrated with a 0.5 N KOH methanol solution, and the added amount (M (mL)) at the point at which the "solution 6" turned slightly purple was measured. The titration amount (N (mL)) required during the blank measurement was confirmed at the same time, and the hydroxyl value was calculated using the acid value determined as described above and the titer q of the 0.5 N KOH methanol solution, in accordance with the following equation.

$$\text{Hydroxyl value (mg KOH/g)} = [\text{acid value}] + ((N - M) \times 0.5 \times 56.11 \times q)/Q$$

< Weight Average Molecular Weight (Mw) and Number Average Molecular Weight (Mn) >

The weight average molecular weight and the number average molecular weight of the acid-terminated polyester (B) were measured by gel permeation chromatography (GPC). The apparatus and measurement conditions used for the GPC measurement are as follows.

Apparatus: GPC
Model: HLC-8020 GPC (manufactured by Tosoh Corporation)
Columns: tandemly connected three TSKgel GMHXL columns (column size: 7.8 mm (ID) × 30.0 cm (L)) (manufactured by Tosoh Corporation)
Detector: RI (manufactured by Tosoh Corporation)

Eluent: tetrahydrofuran (1 mL/min, 40°C)
Sample: 0.04% tetrahydrofuran solution (100 p injection)
Calibration curve: standard polystyrene (manufactured by Tosoh Corporation)

< Glass Transition Temperature (Tg) >

The glass transition temperature of the acid-terminated polyester (B) was measured using a differential scanning calorimeter, DSC-60, manufactured by Shimadzu Corporation, at a heating rate of 5°C/min. The temperature at the intersection of the baseline on the low temperature side and the tangent line to the endothermic curve in the vicinity of the glass transition temperature, in the chart obtained by the measurement, was determined as the glass transition temperature of the of the acid-terminated polyester (B).

[Production and Evaluation of Modified Epoxy Resin]

[Production of Modified Epoxy Resin]

{Examples 1 to 3 and Comparative Examples 2 to 8}

In each of Examples and Comparative Examples, the epoxy compound (A), the acid-terminated polyester (B) and N,N-dimethylbenzylamine (at a concentration of 1,000 ppm with respect to the preparation weight of the epoxy compound (A)) were poured into a separable flask, in accordance with the preparation weights shown in Table 2, and a polymerization reaction was carried out at 170°C for 6 hours under a nitrogen atmosphere, to obtain a modified epoxy resin.

[Evaluation of Modified Epoxy Resin]

The epoxy equivalent, the weight average molecular weight (Mw), the number average molecular weight (Mn), the molecular weight distribution (Mw/Mn) and the glass transition temperature, of each resulting modified epoxy resin, were measured by the following methods, and the measured results are summarized in Table 2.
The epoxy equivalent, the weight average molecular weight (Mw), the number average molecular weight (Mn), the molecular weight distribution (Mw/Mn) and the glass transition temperature of the epoxy resin A-1 used in Comparative Example 1 to be described later, as the epoxy resin of Comparative Example 1, are also shown in Table 2.

< Epoxy Equivalent >

The epoxy equivalent of the modified epoxy resin was measured based on JIS K 7236: 2009 (revised on January 20, 2009) .

< Number Average Molecular Weight (Mn) and Weight Average Molecular Weight (Mw) >

The weight average molecular weight (Mw), the number average molecular weight (Mn), and the molecular weight distribution (Mw/Mn) of the modified epoxy resin were measured by gel permeation chromatography (GPC). The apparatus and measurement conditions used for the GPC measurement are as follows.

Apparatus: GPC
Model: HLC-8120 GPC (manufactured by Tosoh Corporation)
Columns: TSKgel HM-H + H4000 + H4000 + H3000 + H2000 (manufactured by Tosoh Corporation)
Detector: UV-8020 (manufactured by Tosoh Corporation), 254 nm
Eluent: tetrahydrofuran (0.5 mL/min, 40°C)
Sample: 1% tetrahydrofuran solution (10 μ injection)
Calibration curve: standard polystyrene (manufactured by Tosoh Corporation)

< Glass Transition Temperature (Tg) >

The glass transition temperature (Tg) of the modified epoxy resin was measured by increasing the temperature from -50 to 200°C at a rate of 10°C/min, using a differential scanning calorimeter, "DSC7020", manufactured by SII Nanotechnology, Inc. The extrapolated glass transition initiation temperature (Tig) was determined as the temperature at the intersection of the straight line obtained by extending the baseline on the low temperature side toward the high

temperature side, and the tangent line drawn at such a point that the slope of the curve of the stepwise change portion of the glass transition is maximized. The midpoint glass transition temperature (Tmg) was determined as the temperature at the intersection of the straight line that is present at equal distances in the vertical axis direction from the straight lines obtained by extending the respective base lines, and the curve of the stepwise change portion of the glass transition. Based on the present results, it was determined that the resin particles do not fuse with one another (namely, blocking does not occur) at normal temperature, and the modified epoxy resin has an excellent storage stability, when the midpoint glass transition temperature is 45°C or higher, and that the modified epoxy resin has an excellent blocking resistance even in a hot environment, when Tg is 55°C or higher.

[Table 2]

| | | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|
| Epoxy compound (A) | Type | | A-5 | A-5 | A-6 | A-1 | A-2 | A-2 | A-3 | A-4 | A-4 | A-7 | A-7 |
| | Preparation weight | g | 40 | 40 | 70 | | 40 | 40 | 700 | 450 | 450 | 70 | 70 |
| Acid-terminated polyester (B) | Type | | B-1 | B-2 | B-1 | | B-1 | B-2 | B-2 | B-1 | B-2 | B-1 | B-2 |
| | Preparation weight | g | 126 | 131 | 230 | | 132 | 136 | 2,187 | 2,267 | 2,372 | 249 | 239 |
| Proportions of structural units | Structural unit (X) | % | 24 | 23 | 23 | | 23 | 23 | 24 | 17 | 16 | 22 | 23 |
| | Structural unit (Y) | % | 76 | 77 | 77 | | 77 | 77 | 76 | 83 | 84 | 78 | 77 |
| Epoxy equivalent | | g / eq | 2,898 | 2,681 | 2,991 | 1,993 | 2,802 | 2,579 | 1,392 | 2,759 | 2,656 | 3,209 | 2,161 |
| Weight average molecular weight (Mw) | | - | 16,412 | 15,696 | 15,420 | 10,214 | 16,337 | 15,812 | 10,480 | 22,314 | 22,376 | 18,513 | 13,142 |
| Number average molecular weight (Mn) | | - | 4,158 | 3,975 | 3,888 | 3,677 | 4,103 | 3,932 | 2,191 | 5,191 | 5,237 | 4,444 | 3,309 |
| Molesular weight distribution (Mw / Mn) | | - | 3.9 | 3.9 | 4.0 | 2.8 | 4.0 | 4.0 | 4.8 | 4.3 | 4.3 | 4.2 | 4.0 |
| Extrapolated glass transition initiation teperature (Tig) | | °C | 61 | 64 | 60 | 73 | 60 | 61 | 50 | 24 | 26 | 57 | 55 |
| Midpoint glass transition temperature (Tmg) | | °C | 65 | 67 | 62 | 76 | 62 | 64 | 54 | 29 | 31 | 59 | 57 |

[Production and Evaluation of Coating Film]

{Examples 4 to 6 and Comparative Examples 9 to 16}

In Examples 4 to 6 and Comparative Examples 10 to 16, the modified epoxy resins produced in Examples 1 to 3 and Comparative Examples 2 to 8 were used, respectively.

In Comparative Example 9, the epoxy resin A-1 was used instead of the modified epoxy resin.

[Preparation of Coating Film]

In each of the Examples and Comparative Examples, 100 parts by weight (30 parts by weight of the modified epoxy resin or the epoxy resin) of a cyclohexanone solution (solid content: 30% by weight) of the modified epoxy resin or the epoxy resin shown in Table 3 was prepared. To the resulting solution, 0.3 parts by weight of 1-benzyl-2-methylimidazole (jERcure (registered trademark) IBMI12, manufactured by Mitsubishi Chemical Corporation) was mixed, to obtain a curable resin composition. The resulting curable resin composition was coated on the following steel sheet, using a 150 um film applicator. Steel sheet: SPCC-SB (70 mm × 150 mm × thickness: 0.8 mm) subjected to a PB-N144 treatment and acetone degreasing.

Subsequently, the curable resin composition was cured by heating the coated steel sheet at 150°C for 90 minutes, to prepare a coating film.

[Evaluation of Coating Film]

The glass transition temperature of each prepared coating film was measured in the same manner as in the evaluation of the modified epoxy resin described above. Further, the tests of mechanical properties (adhesion, coating film hardness, cupping resistance, point impact resistance and bending resistance) and the thermophysical property test (hot water resistance test) of each prepared coating film were carried out, and the results are summarized in Table 3. Overall evaluation was carried out based on the above-described evaluations and information, and the results are shown in Table 3.

[Tests of Mechanical Properties]

Based on the results of the following adhesion test, coating film hardness test, cupping resistance test, point impact resistance test and bending resistance test, the mechanical properties were evaluated in accordance with the following criteria for overall evaluation of the mechanical properties.

< Adhesion Test >

The cross-cut peeling test of the resulting coating film was performed by the method described in JIS K5600-5-6: 1999 (enacted on April 20, 1999), and the adhesion was evaluated in accordance with the following criteria. It was determined that the coating film has an excellent adhesion, when evaluated as A.

(Evaluation Criteria)

A: No abnormality is observed in the coating film.
B: An abnormality(ies) is/are observed in the coating film.

< Coating Film Hardness Test >

The resulting coating film was tested using a pencil hardness tester (manufactured by TAIYU Equipment Co., Ltd.), based on JIS K5600-5-4: 1999 (enacted on April 20, 1999), and the coating film hardness was evaluated in accordance with the following criteria. It was determined that the coating film has a good coating film hardness, when evaluated as A.

(Evaluation Criteria)

A: No scratch is made by a pencil with pencil hardness F.
B: A scratch is made by a pencil with pencil hardness F.

< Cupping Resistance Test >

The cupping resistance of the resulting coating film was tested using an Erichsen tester (an Erichsen tester, manufactured by TAIYU Equipment Co., Ltd.), based on JIS K5600-5-2: 1999 (enacted on April 20, 1999), and the cupping resistance was evaluated in accordance with the following criteria. It was determined that the coating film has a practically acceptable cupping resistance when evaluated as B or higher, and that the coating has a particularly excellent cupping resistance when evaluated as A.

(Evaluation Criteria)

A: No abnormality (no crack or peeling) is observed in the coating film at the stage of an indentation depth of 9 mm.
B: An abnormality(ties) (a crack(s) and/or peeling) occurred in the coating film at an indentation depth of 5 mm or more and less than 9 mm
C: An abnormality(ties) (a crack(s) and/or peeling) occurred in the coating film at an indentation depth of less than 5 mm.

< Point Impact Resistance Test >

The weight-drop test (DuPont impact test) of the resulting coating film was carried out by the method defined in JIS K5600-5-3: 1999 (enacted on April 20, 1999). A primary test with a medium load and a secondary test with a heavy load were carried out. The primary test: a 1 kg weight was dropped from a height of 500 mm, using a core whose round-tip shape has a diameter of 1/8 inches. The secondary test: a 1 kg weight was dropped from a height of 200 mm, using a core whose round-tip shape has a diameter of 1/16 inches. The state of the coating film after the tests was visually observed, and the point impact resistance was evaluated in accordance with the following criteria. It was determined that the coating film has a practically acceptable point impact resistance when evaluated as B or higher, and that the coating film has a particularly excellent point impact resistance when evaluated as A.

(Evaluation Criteria)

A: No abnormality (no crack or peeling) occurred in the coating film in both of the primary test and the secondary test.
B: No abnormality (no crack or peeling) occurred in the coating film in the primary test, but an abnormality(ties) (a crack(s) and/or peeling) occurred in the coating film in the secondary test.
C: An abnormality(ties) (a crack(s) and/or peeling) occurred in the coating film in the primary test.

< Bending Resistance Test >

One third in the long-side direction of the coated steel sheet was sandwiched and fixed with a table vise fixed to a workbench, and the coated steel sheet was bent 90° such that the surface on the side of the coating film forms a mountain fold, over a period of time of about one second. The bent portion of the coated steel sheet was visually observed, and the bending resistance of the resulting coating film was evaluated in accordance with the following criteria. It was determined that the coating film has a practically acceptable bending resistance, when evaluated as A.

(Evaluation Criteria)

A: No abnormality (no crack or peeling) occurred in the coating film.
B: An abnormality(ies) (a crack(s)) occurred in the coating film.
C: Abnormalities (a crack(s) and peeling) occurred in the coating film.

< Overall Evaluation of Mechanical Properties >

The overall evaluation of the mechanical properties was carried out, based on the evaluations of the adhesion, the coating film hardness, the cupping resistance, the point impact resistance and the bending resistance. It was determined that the coating film has practically acceptable mechanical properties, when evaluated as B or higher.

(Evaluation Criteria)

A: All of the mechanical properties are evaluated as A.
B: The mechanical property(ies) evaluated as B is/are included.
C: The mechanical property(ies) evaluated as C is/are included.

[Thermophysical Property Test]

< Hot Water Resistance Test >

The coated steel sheet which had been subjected to the bending resistance test and bent 90° was immersed in hot water at 98°C or higher for 5 hours. Thereafter, the resulting sheet was washed with water and slowly cooled, then the state of the coating film and the bent portion were visually observed, and the hot water resistance was evaluated in accordance with the following criteria. It was determined that the coating film has a practically acceptable hot water resistance, when evaluated as A.

(Evaluation Criteria)

A: No abnormality was observed both on the coating film surface and at the bent portion.
B: No abnormality was observed on the coating film surface, but the formation of rust was observed at the bent portion.
C: The formation of air bubbles was observed over the entire coating film surface.

[Overall Evaluation]

Overall evaluation was carried out based on the overall evaluation of the mechanical properties and the evaluation of the hot water resistance test. It was determined that the coating film has practically acceptable overall properties when evaluated as B or higher, and that the coating film has particularly excellent overall properties when evaluated as A.

(Evaluation Criteria)

A: The coating film is evaluated as A in both the overall evaluation of the mechanical properties and the evaluation of the hot water resistance test.
B: The coating film is evaluated as A in one of the overall evaluation of the mechanical properties and the evaluation of the hot water resistance test.
C: The coating film is evaluated as C in one of the overall evaluation of the mechanical properties and the evaluation of the hot water resistance test.
D: The coating film is evaluated as C in both the overall evaluation of the mechanical properties and the evaluation of the hot water resistance test.

[Table 3]

| | | | Example 4 | Example 5 | Example 6 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|---|---|
| Curable resin composition | Modified epoxy resin or epoxy resin | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Example 8 |
| Coating film evaluation | Mechanical properties | Adhesion | A | A | A | A | A | A | A | A | A | A | A |
| | | Coating film hardness | A | A | A | A | A | A | A | A | A | A | A |
| | | Cupping resistance | A | A | A | B | A | A | C | A | A | A | A |
| | | Point impact strength | A | A | A | A | B | B | B | C | C | B | C |
| | | Bending resistance | A | A | A | A | A | A | B | B | B | A | A |
| | | Overall evaluation of mechanical prperties | A | A | A | B | B | B | C | C | C | B | C |
| | Thermophysical property | Hot water resistance | A | A | A | A | A | A | B | C | C | A | A |
| | Overall evaluation | | A | A | A | B | B | B | C | D | D | B | C |

[Evaluation Results]

As can be seen from the present Examples and Comparative Examples, a modified epoxy resin which contains a structural unit (X) derived from an epoxy compound and a structural unit (Y) derived from an acid-terminated polyester, which has a weight average molecular weight and an epoxy equivalent within specific ranges, and in which the proportion of the structural unit (X) is within a specific range, shows an excellent coating film performance.

**Claims**

1. A modified epoxy resin, comprising a structural unit derived from an epoxy compound, and a structural unit derived from an acid-terminated polyester,

   wherein the modified epoxy resin has:

   a weight average molecular weight of from 1,500 to 50,000; and
   an epoxy equivalent of from 500 to 10,000 g/eq, and

   wherein the modified epoxy resin is represented by the following formula (1):

   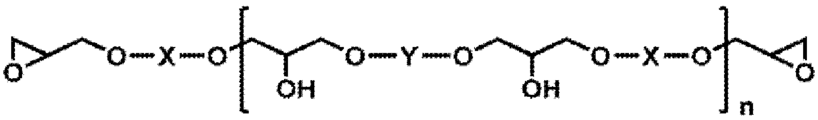 · · · (1)

   wherein, in the formula (1), n is the mean value of the number of repeating units, and represents a number from 1 to 30; X is a structural unit derived from an epoxy compound, and represents a divalent group represented by the following formula (2); Y is a structural unit derived from an acid-terminated polyester, and represents a divalent group represented by the following formula (3); a plurality of X's may be the same as, or different from, each other; and a plurality of Y's may be the same as, or different from, each other;

   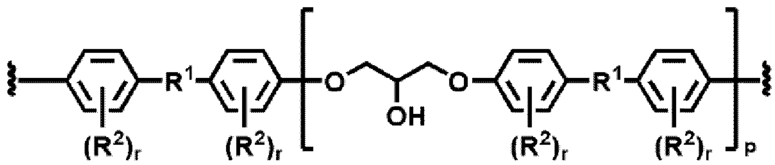 · · · (2)

   wherein, in the formula (2), p is the mean value of the number of repeating units, and represents a number from 0 to 10; $R^1$ represents a direct bond or an alkylene group having from 1 to 15 carbon atoms; $R^2$ represents an alkyl group having from 1 to 4 carbon atoms; r represents an integer from 1 to 4; a plurality of $R^1$'s may be the same as, or different from, each other; a plurality of $R^2$'s may be the same as, or different from, each other; and a plurality of r's may be the same as, or different from, each other;

   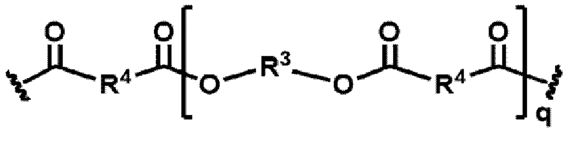 · · · (3)

   wherein, in the formula (3), $R^3$ represents a hydrocarbon group having from 2 to 40 carbon atoms which may contain a hetero atom; $R^4$ represents a hydrocarbon group having from 2 to 40 carbon atoms which may contain a hetero atom; q is the mean value of the number of repeating units, and represents a number from 1 to 50; a plurality of $R^3$'s may be the same as, or different from, each other; and a plurality of $R^4$'s may be the same as, or different from, each other.

2. The modified epoxy resin according to claim 1, wherein, in the formula (2), $R^1$ represents a direct bond or a methylene group, $R^2$ represents a methyl group, and r represents an integer from 1 to 2.

3. A method of producing a modified epoxy resin, the method comprising a reaction step of allowing an epoxy compound (A) represented by the following formula (4) to react with an acid-terminated polyester (B) represented by the following formula (5):

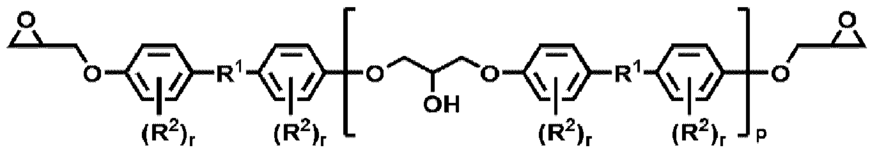

... (4)

wherein, in the formula (4), the definitions of p, r, $R^1$ and $R^2$ are the same as those of p, r, $R^1$ and $R^2$ in the formula (2), respectively;

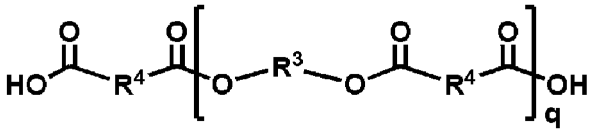

... (5)

wherein, in the formula (5), the definitions of $R^3$, $R^4$ and q are the same as those of $R^3$, $R^4$ and q in the formula (3), respectively.

4. The method of producing a modified epoxy resin according to claim 3, wherein the modified epoxy resin has a weight average molecular weight of from 1,500 to 50,000.

5. The method of producing a modified epoxy resin according to claim 3 or 4, wherein the modified epoxy resin has an epoxy equivalent of from 500 to 10,000 g/eq.

6. A curable resin composition comprising the modified epoxy resin according to claim 1 or 2, and a curing agent.

7. A coating material comprising the curable resin composition according to claim 6.

8. An adhesive comprising the curable resin composition according to claim 6.

9. A coating composition for powder coating, comprising the curable resin composition according to claim 6.

10. A coating composition for a can, comprising the curable resin composition according to claim 6.

11. A prepreg comprising the curable resin composition according to claim 6.

12. A cured product obtained by curing the curable resin composition according to claim 6.

13. A coating film comprising the cured product according to claim 12.

14. A fiber-reinforced plastic comprising the cured product according to claim 12.

15. A laminated plate comprising the cured product according to claim 12.

16. A member for a can, comprising a substrate for a can, and the coating film according to claim 13 provided on the surface of the substrate for a can.

17. A can using the member for a can according to claim 16.

**INTERNATIONAL SEARCH REPORT**

International application No.
**PCT/JP2023/001214**

**A. CLASSIFICATION OF SUBJECT MATTER**

***C08G 59/14***(2006.01)i; ***C08G 59/04***(2006.01)i; ***C08J 5/24***(2006.01)i; ***C09D 163/00***(2006.01)i; ***C09J 163/00***(2006.01)i
FI: C08G59/14; C08G59/04; C09D163/00; C09J163/00; C08J5/24 CFC

According to International Patent Classification (IPC) or to both national classification and IPC

**B. FIELDS SEARCHED**

Minimum documentation searched (classification system followed by classification symbols)

C08G59/14; C08G59/04; C08J5/24; C09D163/00; C09J163/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2010-282154 A (SHARP CORP) 16 December 2010 (2010-12-16)<br>claims, paragraphs [0023]-[0026], [0029], [0036], [0113], examples 1-6, 9-12 | 1-5<br>6-7, 9, 12-13, 15<br>8, 10-11, 14, 16-17 |
| X<br>Y<br>A | JP 2002-129126 A (TOMOEGAWA PAPER CO LTD) 09 May 2002 (2002-05-09)<br>claims, paragraphs [0005]-[0006], [0011], [0013], [0015], examples 1-18 | 1-8, 12-13, 15<br>6-7, 9, 12-13, 15<br>10-11, 14, 16-17 |
| A | JP 2009-286843 A (PANASONIC ELECTRIC WORKS CO LTD) 10 December 2009 (2009-12-10)<br>paragraphs [0006]-[0008], [0014] | 1-17 |
| A | JP 2001-261777 A (SUMITOMO BAKELITE CO LTD) 26 September 2001 (2001-09-26)<br>paragraphs [0028], [0030] | 1-17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/001214

C. DOCUMENTS CONSIDERED TO BE RELEVANT

| Category* | Citation of document, with indication, where appropriate, of the relevant passages | Relevant to claim No. |
|---|---|---|
| A | KR 10-1503284 B1 (KOREA ELECTRONICS TECHNOLOGY INSTITUTE) 17 March 2015 (2015-03-17) entire text, all drawings | 1-17 |

Form PCT/ISA/210 (second sheet) (January 2015)

**INTERNATIONAL SEARCH REPORT**
**Information on patent family members**

International application No.
**PCT/JP2023/001214**

| Patent document cited in search report | | | Publication date (day/month/year) | Patent family member(s) | Publication date (day/month/year) |
|---|---|---|---|---|---|
| JP | 2010-282154 | A | 16 December 2010 | (Family: none) | |
| JP | 2002-129126 | A | 09 May 2002 | (Family: none) | |
| JP | 2009-286843 | A | 10 December 2009 | (Family: none) | |
| JP | 2001-261777 | A | 26 September 2001 | (Family: none) | |
| KR | 10-1503284 | B1 | 17 March 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019518091 A
- JP 2019073676 A